(19) Europäisches Patentamt
European Patent Office
Office européen des brevets

(11) EP 0 853 779 B1

(12) EUROPEAN PATENT SPECIFICATION

(45) Date of publication and mention
of the grant of the patent:
**13.08.2003 Bulletin 2003/33**

(51) Int Cl.[7]: **G06F 9/30**, G06F 9/38

(21) Application number: **96933144.6**

(22) Date of filing: **03.10.1996**

(86) International application number:
**PCT/US96/15415**

(87) International publication number:
**WO 97/013192 (10.04.1997 Gazette 1997/16)**

(54) **INSTRUCTION PREDECODE AND MULTIPLE INSTRUCTION DECODE**

BEFEHLSVORDEKODIERUNG UND DEKODIERUNG MEHRERER BEFEHLE

PREDECODEUR D'INSTRUCTIONS ET DECODEUR D'INSTRUCTIONS MULTIPLES

(84) Designated Contracting States:
**DE ES FR GB NL**

(30) Priority: **06.10.1995 US 5069 P**
**10.10.1995 US 5021 P**
**26.01.1996 US 592207**
**16.05.1996 US 649981**

(43) Date of publication of application:
**22.07.1998 Bulletin 1998/30**

(73) Proprietor: **Advanced Micro Devices, Inc.**
**Sunnyvale, CA 94088-3453 (US)**

(72) Inventors:
• **FAVOR, John, G.**
**San Jose, CA 95124 (US)**
• **BEN-MEIR, Amos**
**Cupertino, CA 95014 (US)**

(74) Representative: **Brookes Batchellor**
**102-108 Clerkenwell Road**
**London EC1M 5SA (GB)**

(56) References cited:
**EP-A- 0 467 152**          **EP-A- 0 498 654**
**WO-A-92/06426**          **WO-A-93/20507**
**US-A- 5 371 864**

EP 0 853 779 B1

**Description**

## TECHNICAL FIELD

This invention relates to processors. More specifically, this invention relates to processors having an instruction decoder for decoding multiple instructions simultaneously and a predecoder for preparing instructions for rapid decoding.

## BACKGROUND ART

Advanced microprocessors, such as P6-class x86 processors, are defined by a common set of features. These features include a superscalar architecture and performance, decoding of multiple x86 instructions per cycle and conversion of the multiple x86 instructions into RISC-like operations. The RISC-like operations are executed out-of-order in a RISC-type core that is decoupled from decoding. These advanced microprocessors support large instruction windows for reordering instructions and for reordering memory references.

In a microprocessor having a superscalar architecture, multiple computer instructions are transferred from a memory, decoded and executed simultaneously so that the execution of instructions is accelerated. A RISC-type processor typically has no problem decoding multiple instructions per cycle because all instructions are the same length. When all instructions are the same length, multiple instructions are easily transferred from memory in parallel because the memory locations of all instructions is known or readily ascertainable, allowing multiple instructions to be simultaneously transferred to instruction registers inside the processor. However, many microprocessors and computers, such as x86 processors that have a complex instruction set computer (CISC) type architecture, use a CISC-type variable-length instruction set in which different instructions have different instruction lengths, varying from one byte (8 bits) to fifteen bytes (120 bits) in length. Thus the locating of multiple instructions is a sequential process, and therefore slow process, because one instruction must be decoded to determine the length of the instruction before the starting location of the next decodable instruction is ascertained.

Decoding of multiple x86 instructions in parallel has additional difficulties. For example, the actual length of various instructions depends not only on the first byte of the instruction, generally the opcode byte which defines the operation of the instruction, but also depends on additional bytes as a complicated function of the opcode and other instruction fields. The minimum-size instruction in the x86 architecture is a single byte, usually containing an 8-bit opcode. X86 instruction opcode fields range in length from 8 bits to 16 bits long. For some instructions, a byte containing the opcode field (the "opcode" byte) also contains a register field. X86 operations include register-to-register, register-to-memory, or memory-to-register (but not memory-to-memory) operations. An optional modrm field following the opcode field contains the register specifier and specifies memory addressing of the instruction. In some instructions, the modrm field, employed in a slightly different format, selects condition flags. Some instructions contain an immediate data field that ranges from 0 to 4 bytes in length. Some instruction fields specify whether or not other fields are present. For example, modrm and sib fields indicate whether a displacement (DISP) field is present and the length of the DISP field. The DISP field is further modified by a prefix byte that changes the address size of an instruction. The modrm field has various possible formats. The first byte of the modrm field always contains a modrm specifier of register and addressing mode. The modrm field also contains an optional displacement or offset field for address computation. The 8-bit sib field specifies the operative manner of address computation.

Length of the displacement and immediate fields depends on the data-width mode of the instruction. Various instructions operate on 8-bit, 16-bit, or 32-bit data. Data width is determined primarily by a segment descriptor in the memory management architecture, but the default for the segment can be overridden by a bit in the instruction (a w-bit) or by a prefix byte which toggles the effect of the w-bit.

Prefix bytes can appear before any instruction. A prefix byte changes the interpretation of the instruction. A prefix byte, for example, changes the memory address or operand size of the instruction, changes the default segment used in memory addressing, or indicates that the instruction should be executed with the external bus locked. In some instructions more than one prefix is included before an instruction. Each type of prefix byte is independent of the others, so that the maximum instruction length is 15 bytes for non-redundant prefixes.

What is needed is a system and method for accessing a plurality of variable-length instructions and preparing the variable-length instructions for decoding of multiple instructions in parallel. One aspect of this system and method is a technique for determining the length of the variable-length instructions in parallel.

EP-A-498 654 discloses a data processor including a cache memory for processing at least one variable length instruction taken from a memory and feeding the processed information to a control unit. The cache memory stores the variable length instruction together with the decoded instruction length information. The variable length instruction and the instruction length information are then fed to the control unit which enables it to simultaneously decode a plurality of variable length instructions.

It is not clear from EP 498 654 as to how the instruction length is determined. In Figure 6 components 241 to 244 are shown but it is not clear how these operate.

The present invention provides, according to the first aspect, an apparatus for accessing a plurality of variable-length instructions from an instruction source and preparing the instructions for execution, the variable length instructions including one or more instruction units, an instruction unit being a multiple-bit instruction portion, the apparatus comprising:

an instruction cache coupled to the instruction source and having a plurality of instruction storage elements for storing instruction units and having a plurality of code storage elements for storing code units, a code unit being a multiple-bit code portion, the instruction storage elements being associated with corresponding code storage elements and storing instruction units being associated with corresponding code units;

a predecoder coupled to the instruction cache for reading instruction units, the predecoder assigning a code indicative of instruction length based on the read instruction units assuming each instruction unit is a first instruction unit of a variable-length instruction;

a decoder coupled to the instruction cache to receive a plurality of instruction units and a plurality of corresponding code units, the decoder including a plurality of first instruction type decoders and a second instruction type decoder, the decoder for decoding a plurality of first instruction type instructions in parallel using the plurality of first instruction type decoders when a first instruction type instruction unit and a corresponding code unit is received from the instruction cache and otherwise for decoding an instruction using the second instruction type decoder.

The present invention also provides a method of receiving a plurality of variable-length instructions from an instruction source and preparing the variable-length instructions for execution, the variable-length instructions including a variable number of instruction units, an instruction unit being a multiple-bit instruction portion, the method comprising the steps of:

receiving a plurality of instruction units in parallel;

storing the plurality of instruction units;

reading one or more instruction units;

determining an instruction length associated to each instruction unit assuming that the instruction unit is a first unit of an instruction;

storing the instruction length associated to each instruction unit;

associating stored instruction units into instructions;

determining whether a plurality of instruction units are decodable by a plurality of first instruction type decoders for decoding a plurality of instructions in parallel and are decodable by a second instruction type decoder serially; and

applying a plurality of instruction units to the first instruction type decoder and the second instruction type decoder, the instruction units being applied to the first instruction type decoder for a plurality of instructions decodable by the first instruction type decoders.

Variable-length instructions may be prepared for simultaneous decoding and execution of a plurality of instructions in parallel by predecoding each byte of an instruction, assuming each byte to be an opcode byte since the actual opcode byte is not identified. The predecoding operation may associate an instruction length to each instruction byte. The instruction length is found for some instructions by reading a single instruction byte. For other instructions require more information to determine the instruction length and two or three instruction bytes are read. Based on the instruction length determination, instructions are classified into a group of instructions in which multiple instructions are decoded in parallel and a group of instructions in which multiple instructions are not decoded in parallel. Predecode information including a designation of instruction length and a designation of classification group is stored for each instruction byte. The instruction bytes and associated predecode information are applied to a decoder that includes a plurality of first group instruction decoders for decoding a plurality of parallel-decodable instructions in parallel and a second group instruction decoder for decoding instructions that are not decodable in parallel.

Predecode information is useful for quickly identifying the next instructions to be decoded, facilitating the decoding of multiple instructions per cycle. Predecode information also determines whether an instruction is decodable in parallel with other instructions and aids quick calculation of the length of instructions that are decodable in parallel to determine whether a sufficient number of bytes or the instruction are available in an instruction register for a full instruction to be decoded. Predecode information includes a HASMODRM bit that is useful for determining whether predecode bits are valid for an instruction.

In accordance with one aspect of the present invention, an apparatus and method determines and stores in a memory, for many instruction bytes, the location of a following instruction byte assuming that each of the instruction bytes is the first byte of an instruction. The instruction bytes are subsequently transferred from the memory and a first byte of an actual instruction is located, followed by rapid determination of the location of first bytes of subsequent actual instructions. A plurality of subsequent instructions are identified, allowing simultaneous loading of instructions into several instruction registers for simultaneously decoding and executing instructions.

Many advantages are achieved using the described system and method. Multiple instructions are advantageously decoded per cycle in a processor architecture that resists decoding in parallel. An inherently serial decoding operation is advantageously converted to a parallel operation. Instructions that can execute in parallel and instructions that cannot are recognized prior to decoding so that decoding in parallel is advantageously accomplished only for those instructions that would benefit from decoding in parallel. Predecode information is advantageously derived and stored as a combination of instruction length and program counter information so that data pointers are easily determined and instructions easily accessed.

It is advantageous that the predecode bits designate instruction location in the form of a list and that, in some embodiments, the list controller is implemented to avoid time-consuming calculations, thus allowing for fast traversal of a list while reducing storage space consumed to store each pointer.

It is advantageous that the predecode bits are compactly stored and easily expanded for usage to reduce the size of memory storage.

## BRIEF DESCRIPTION OF THE DRAWINGS

The features of the invention believed to be novel are specifically set forth in the appended claims. However, the invention itself, both as to its structure and method of operation, may best be understood by referring to the following description and accompanying drawings.

**Figure 1** is a block diagram which illustrates a computer system in accordance with one embodiment of the present invention.

**Figure 2** is a block diagram illustrating one embodiment of processor for usage in the computer system shown in **Figure 1**.

**Figure 3** is a timing diagram which illustrates pipeline timing for an embodiment of the processor shown in **Figure 2**.

**Figure 4** is a schematic block diagram showing an embodiment of an instruction decoder used in the processor shown in **Figure 2**.

**Figure 5** is a block diagram of a memory including sixteen addressable memory locations holding sixteen instruction bytes that make up, for example, three variable length instructions, in combination with predecode bits indicative of following-instruction location information.

**Figure 6** is a flow chart illustrating a method for efficiently storing a pointer and rapidly identifying the address of a next element in a list of a plurality of elements in accordance with one embodiment of the present invention.

**Figure 7** is a pictorial diagram illustrating a 32-word memory storage, such as an instruction cache, for storing a plurality of memory elements or units and pointers, in which the elements of the list are ordered in increasing sequential address locations.

**Figure 8** is a block diagram of a memory including sixteen addressable memory locations holding sixteen instruction byte values that make up, for example, three variable length instruction codes, in combination with predecode bit codes indicative of following-instruction location information.

**Figure 9** is a flow chart illustrating a method of preparing computer instructions for rapid decoding in accordance with an embodiment of the present invention.

**Figure 10** is a schematic block diagram showing a circuit for preparing computer instructions for rapid decoding in accordance with the present invention.

**Figure 11** is a schematic circuit diagram showing an embodiment of a circuit for preparing computer instructions for rapid decoding in accordance with an embodiment of the present invention.

**Figure 12** is a schematic pictorial diagram of an addressable memory location containing an instruction code byte and a code for the location of the next instruction assuming that the instruction code byte is the starting byte of an instruction.

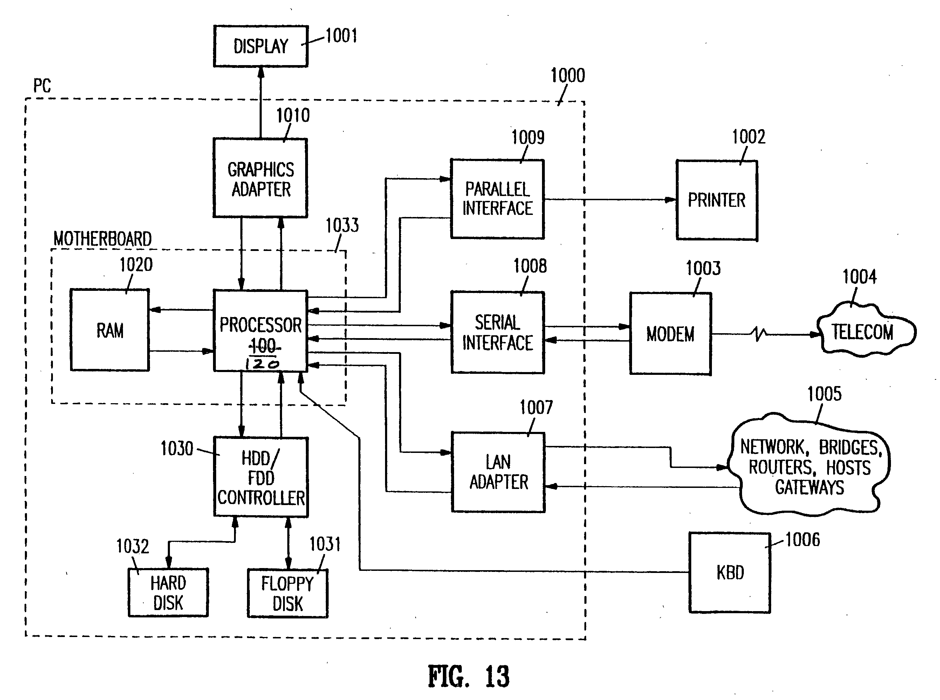

**Figure 13** is a block diagram of a personal computer incorporating a processor having an instruction decoder including emulation using indirect specifiers in accordance with an embodiment of the present invention.

## MODE(S) FOR CARRYING OUT THE INVENTION

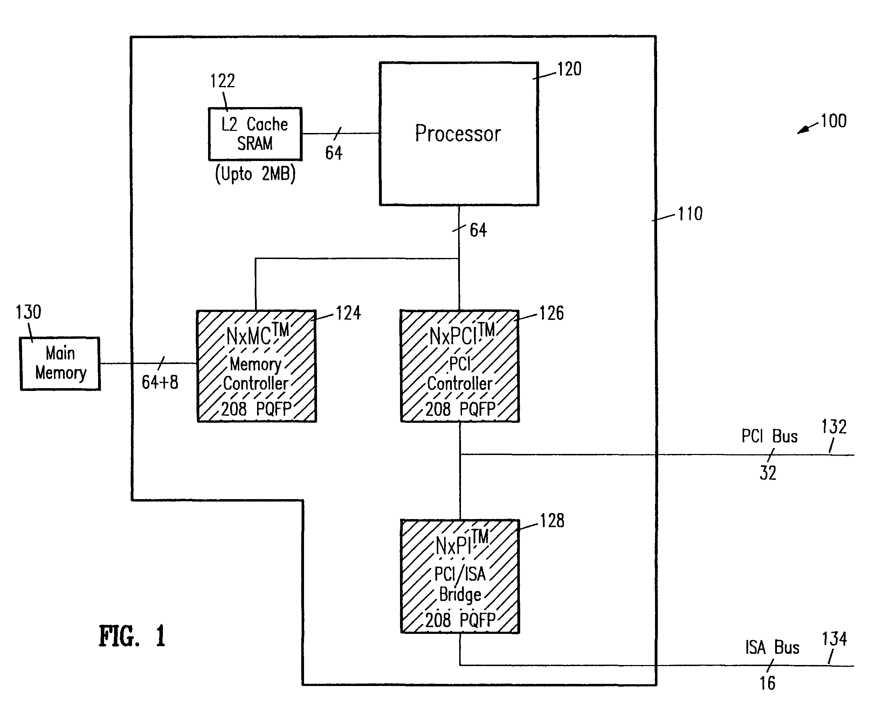

Referring to **Figure 1**, a computer system **100** is used in a variety of applications, including a personal computer application. The computer system **100** includes a computer motherboard **110** containing a processor **120** in accordance with an embodiment of the invention. Processor **120** is a monolithic integrated circuit which executes a complex instruction set so that the processor **120** may be termed a complex instruction set computer (CISC). Examples of complex instruction sets are the x86 instruction sets implemented on the well known 8086 family of microprocessors. The processor **120** is connected to a level 2 (L2) cache **122**, a memory controller **124** and local bus controllers **126** and **128**. The memory controller **124** is connected to a main memory **130** so that the memory controller **124** forms an interface between the processor **120** and the main memory **130**. The local bus controllers **126** and **128** are connected to buses including a PCI bus **132** and an ISA bus **134** so that the local bus controllers **126** and **128** form interfaces between the PCI bus **132** and the ISA bus **134**.

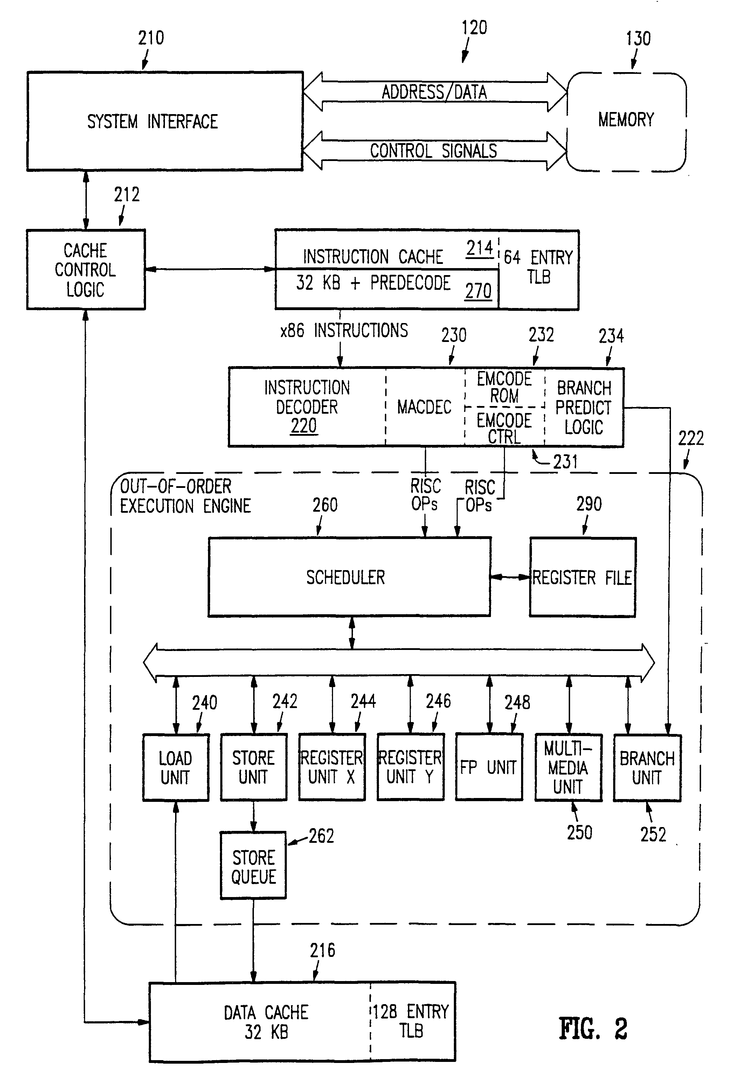

Referring to **Figure 2**, a block diagram of an embodiment of processor **120** is shown. The core of the processor **120** is a RISC superscalar processing engine. Common x86 instructions are converted by instruction decode hardware to operations in an internal RISC86 instruction set. Other x86 instructions, exception processing, and other miscellaneous functionality is implemented as RISC86 operation sequences stored in on-chip ROM. Processor **120** has interfaces including a system interface **210** and an L2 cache control logic **212**. The system interface **210** connects the processor **120** to other blocks of the computer system **100**. The processor **120** accesses the address space of the computer system **100**, including the main memory **130** and devices on local buses **132** and **134** by read and write accesses via the system interface **210**. The L2 cache control logic **212** forms an interface between an external cache, such as the L2 cache **122**. and the processor **120**. Specifically, the L2 cache control logic **212** interfaces the L2 cache **122** and to an instruction cache **214** and a data cache **216** in the processor **120**. The instruction cache **214** and the data cache **216** are level 1 (L1) caches which are connected through the L2 cache **122** to the address space of the computer system **100**.

The instruction cache **214** is a 16 KByte instruction cache with associated control logic. The instruction cache **214** is organized as a two-way set associative cache having of line size of 32 Bytes. The instruction cache **214** has a total physical storage of 24 Kbytes for storing 16 Kbytes of instruction and 8 Kbytes of predecode information. This physical storage is configured as three units, including two instruction units and one predecode information unit, of a 512 x 128 cache RAM structure. The instruction cache **214** is logically dual-ported including a read port and a write port, although the cache has only a single physical port.

Instructions from main memory **130** are loaded into instruction cache **214** via a predecoder **270** for anticipated execution. As the instruction cache **214** is filled with instructions, the predecoder **270** predecodes the instruction bytes, generating predecode information that is also stored in the instruction cache **214**. Data in the instruction cache **214** are subsequently transferred to begin decoding the instructions, using the predecode information to facilitate simultaneous decoding of multiple x86 instructions. A fundamental impediment to efficient decoding of x86 instructions is the variable-length nature of these instructions in which x86 instruction length varies in a range from one word to fifteen words. The predecode information facilitates decoding of variable-length instructions by specifying the length of each x86 instruction, thereby designating the instruction boundaries for typically a plurality of x86 instructions. Once the instruction boundaries are known, multiple instruction decoding in parallel is substantially simplified.

The predecoder **270** generates predecode bits that are stored in combination with instruction bits in the instruction cache **214**. The predecode bits, for example 3 bits, are fetched along with an associated instruction byte (8 bits) and used to facilitate multiple instruction decoding and reduce decode time. Instruction bytes are loaded into instruction cache **214** thirty-two bytes at a time in a burst transfer of four eight-byte quantities. Logic of the predecoder **270** is replicated sixteen times so that predecode bits for all sixteen instruction bytes are calculated simultaneously immediately before being written into the instruction cache **214**. Instructions in instruction cache **214** are CISC instructions, referred to as macroinstructions. An instruction decoder **220** converts CISC instructions from instruction cache **214** into operations of a reduced instruction set computing (RISC) architecture instruction set for execution on an execution engine **222**. A single macroinstruction from instruction cache **214** decodes into one or multiple operations for execution engine **222**.

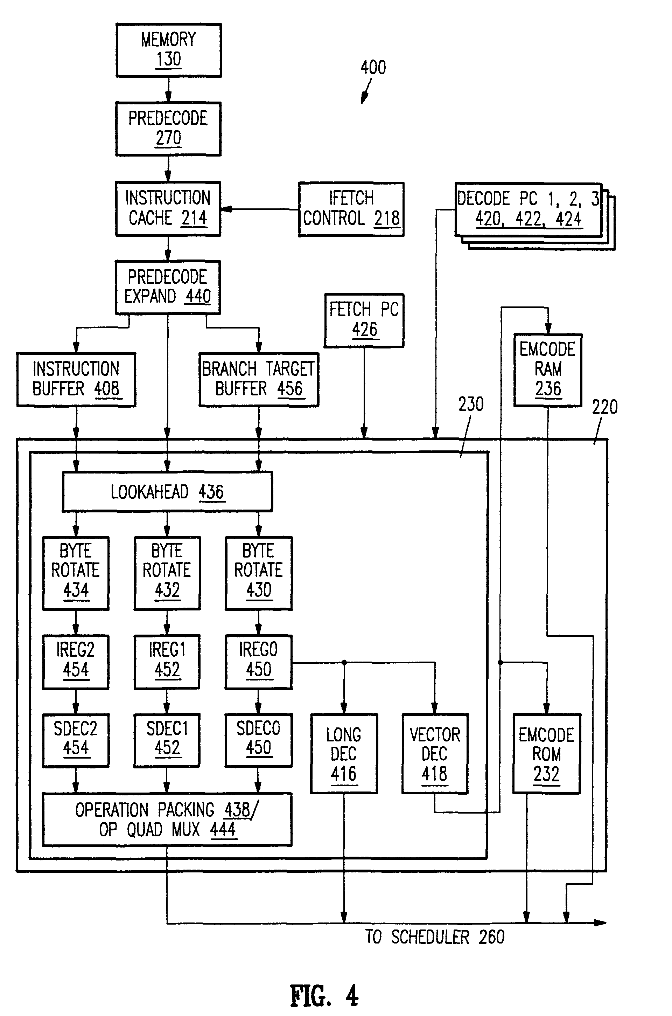

Instruction decoder **220** has interface connections to the instruction cache **214** and an instruction fetch control circuit **218** (shown in **Figure 4**). Instruction decoder **220** includes a macroinstruction decoder **230** for decoding most x86 instructions, an instruction decoder emulation circuit **231** including an emulation ROM **232** for decoding instructions including complex instructions, and a branch unit **234** for branch prediction and handling. Several types of macroinstructions are defined relating to the general type of operations into which the macroinstructions are converted. The general types of operations are register operations (RegOps), load-store operations (LdStOps), load immediate value operations (LIMMOps), special operations (SpecOps) and floating point operations (FpOps).

Execution engine **222** has a scheduler **260** and six execution units including a load unit **240**, a store unit **242**, a first register unit **244**, a second register unit **246**, a floating point unit **248** and a multimedia unit **250**. The scheduler **260** distributes operations to appropriate execution units and the execution units operate in parallel. Each execution unit executes a particular type of operation. In particular, the load unit **240** and the store unit **242** respectively load (read) data or store (write) data to the data cache **216** (L1 data cache), the L2 cache **122** and the main memory **130** while executing a load/store operation (LdStOp). A store queue **262** temporarily stores data from store unit **242** so that store unit **242** and load unit **240** operate in parallel without conflicting accesses to data cache **216**. Register units **244** and **246** execute register operations (RegOps) for accessing a register file **290**. Floating point unit **248** executes floating point operations (FpOps). Multimedia unit **250** executes arithmetic operations for multimedia applications.

Scheduler **260** is partitioned into a plurality of, for example, 24 entries where each entry contains storage and logic. The 24 entries are grouped into six groups of four entries, called Op quads. Information in the storage of an entry describes an operation for execution, whether or not the execution is pending or completed. The scheduler monitors the entries and dispatches information from the entries to information-designated execution units.

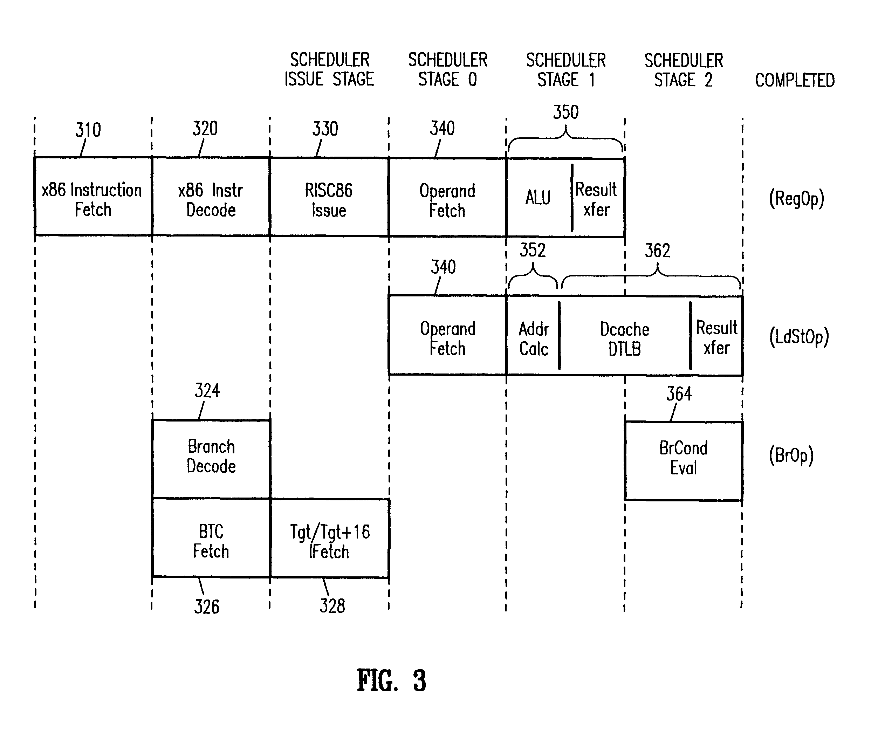

Referring to **Figure 3**, processor **120** employs five and six stage basic pipeline timing. Instruction decoder **220** decodes two instructions in a single clock cycle. During a first stage **310**, a fetch cycle stage, the instruction fetch control circuit **218** fetches CISC instructions into instruction cache **214**. Predecoding of the CISC instructions during stage **310** reduces subsequent decode time. During a second stage **320**, a decode cycle stage, instruction decoder **220** decodes instructions from instruction cache **214** and loads an Op quad into scheduler **260**. During a third stage **330**, an issue cycle stage, scheduler **260** scans the entries and issues operations to corresponding execution units **240** to **252** if an operation for the respective types of execution units is available. Operands for the operations issued during stage **330** are forwarded to the execution units in a fourth stage **340**. For a RegOp, the operation generally completes in the next clock cycle which is stage **350**, but LdStOps require more time for address calculation **352**, data access and transfer of the results **362**.

The decode cycle stage **320** includes two half cycles. In a first decode half cycle, the instruction cache **214** is accessed, the D-bit is checked to determine whether the predecode instruction length bits are to be adjusted for D-bit status, and the predecode bits are converted from an indication of length into a pointer. In a second decode half cycle, it is determined whether the instruction cache **214** or a branch target buffer (BTB) is the source of instructions for decoding, and it is further determined whether this instruction source is to provide the instructions or if an instruction buffer is to source the instructions. Also in the a second decode half cycle, the instruction bytes and predecode information are presented to rotators, data is rotated by the rotators to find the starting instruction byte, additional bytes of the first instruction and the predecode information associated with the starting instruction byte. A predecode index is used to rotate the instruction byte data to find a second instruction byte of an instruction and additional bytes of the second instruction. Specifically, low-order bits of a program counter control a first rotator to rotate a first instruction. Subsequent rotators are controlled to rotate subsequent instructions under control of the predecode information of the immediately preceding instruction. Also in the a second decode half cycle, output instruction data are rotated to determine various other fields within an instruction register, any 0F prefix is stripped from an instruction, the instruction and control bits are registered, and instruction buffers are updated and the updated data is presented to rotators.

For branch operations, instruction decoder **220** performs a branch prediction **324** during an initial decoding of a branch operation. A branch unit **252** evaluates conditions for the branch at a later stage **364** to determine whether the branch prediction **324** was correct. A two level branch prediction algorithm predicts a direction of conditional branching, and fetching CISC instructions in stage **310** and decoding the CISC instructions in stage **320** continues in the predicted branch direction. Scheduler **260** determines when all condition codes required for branch evaluation are valid, and directs the branch unit **252** to evaluate the branch instruction. If a branch was incorrectly predicted, operations in the scheduler **260** which should not be executed are flushed and decoder **220** begins loading new Op quads from the correct address after the branch. A time penalty is incurred as instructions for the correct branching are fetched. Instruction decoder **220** either reads a previously-stored predicted address or calculates an address using a set of parallel adders. If a previously-predicted address is stored, the predicted address is fetched in stage **326** and instructions located at the predicted address are fetched in stage **328** without a delay for adders. Otherwise, parallel adders calculate the predicted address.

In branch evaluation stage **364**, branch unit **252** determines whether the predicted branch direction is correct. If a predicted branch is correct, the fetching, decoding, and instruction-executing steps continue without interruption. For an incorrect prediction, scheduler **260** is flushed and instruction decoder **220** begins decoding macroinstructions from the correct program counter subsequent to the branch.

Referring to **Figure 4**, a schematic block diagram illustrates an embodiment of an instruction preparation circuit **400** which is connected to the main memory **130**. The instruction preparation circuit **400** includes the instruction cache **214** that is connected to the main memory **130** via the predecoder **270**. The instruction decoder **220** is connected to receive instruction bytes and predecode bits from three alternative sources, the instruction cache **214**, a branch target buffer (BTB) **456** and an instruction buffer **408**. The instruction bytes and predecode bits are supplied to the instruction decoder **220** through a plurality of rotators **430**, **432** and **434** via instruction registers **450**, **452** and **454**. The macroinstruction decoder **230** has input connections to the instruction cache **214** and instruction fetch control circuit **218** for receiving instruction bytes and associated predecode information. The macroinstruction decoder **230** buffers fetched instruction bytes in an instruction buffer **408** connected to the instruction fetch control circuit **218**. The instruction buffer **408** is a sixteen byte buffer which receives and buffers up to 16 bytes or four aligned words from the instruction cache **214**, loading as much data as allowed by the amount of free space in the instruction buffer **408**. The instruction buffer **408** holds the next instruction bytes to be decoded and continuously reloads with new instruction bytes as old ones are processed by the macroinstruction decoder **230**. Instructions in both the instruction cache **214** and the instruction buffer **408** are held in "extended" bytes, containing both memory bits (8) and predecode bits (5), and are held in the same alignment. The predecode bits assist the macroinstruction decoder **230** to perform multiple instruction decodes within a single clock cycle.

Instruction bytes addressed using a decode program counter (PC) **420**, **422**, or **424** are transferred from the instruction buffer **408** to the macroinstruction decoder **230**. The instruction buffer **408** is accessed on a byte basis by decoders in the macroinstruction decoder **230**. However on each decode cycle, the instruction buffer **408** is managed on a word basis for tracking which of the bytes in the instruction buffer **408** are valid and which are to be reloaded with new bytes from the instruction cache **214**. The designation of whether an instruction byte is valid is maintained as the instruction byte is decoded. For an invalid instruction byte, decoder invalidation logic (not shown), which is connected to the macroinstruction decoder **230**, sets a "byte invalid" signal. Control of updating of the current fetch PC **426** is synchronized closely with the validity of instruction bytes in the instruction buffer **408** and the consumption of the instruction bytes by the instruction decoder **220**.

The macroinstruction decoder **230** receives up to sixteen bytes or four aligned words of instruction bytes fetched from the instruction fetch control circuit **218** at the end of a fetch cycle. Instruction bytes from the instruction cache **214** are loaded into a 16-byte instruction buffer **408**. The instruction buffer **408** buffers instruction bytes, plus predecode information associated with each of the instruction bytes, as the instruction bytes are fetched and/or decoded. The instruction buffer **408** receives as many instruction bytes as can be accommodated by the instruction buffer **408** free space, holds the next instruction bytes to be decoded and continually reloads with new instruction bytes as previous instruction bytes are transferred to individual decoders within the macroinstruction decoder **230**. The instruction predecoder **270** adds predecode information bits to the instruction bytes as the instruction bytes are transferred to the instruction cache **214**. Therefore, the instruction bytes stored and transferred by the instruction cache **214** are called extended bytes. Each extended byte includes eight memory bits plus five predecode bits. The five predecode bits include three bits that encode instruction length, one D-bit that designates whether the instruction length is D-bit dependent, and a HasModRM bit that indicates whether an instruction code includes a modrm field. The thirteen bits are stored in the instruction buffer **408** and passed on to the macroinstruction decoder **230** decoders. The instruction buffer **408** expands each set of five predecode bits into six predecode bits. Predecode bits enable the decoders to quickly perform multiple instruction decodes within one clock cycle.

The instruction buffer **408** receives instruction bytes from the instruction cache **214** in the memory-aligned word basis of instruction cache **214** storage so that instructions are loaded and replaced with word granularity. Thus, the instruction buffer **408** byte location 0 always holds bytes that are addressed in memory at an address of 0 (mod 16).

Instruction bytes are transferred from the instruction buffer **408** to the macroinstruction decoder **230** with byte granularity. During each decode cycle, the sixteen extended instruction bytes within the instruction buffer **408** , including associated implicit word valid bits, are transferred to the plurality of decoders within the macroinstruction decoder **230**. This method of transferring instruction bytes from the instruction cache **214** to the macroinstruction decoder **230** via the instruction buffer **408** is repeated with each decode cycle as long as instructions are sequentially decoded. When a control transfer occurs, for example due to a taken branch operation, the instruction buffer **408** is flushed and the method is restarted.

The current decode PC has an arbitrary byte alignment in that the instruction buffer **408** has a capacity of sixteen bytes but is managed on a four-byte word basis in which all four bytes of a word are consumed before removal and replacement or the word with four new bytes in the instruction buffer **408**. An instruction has a length of one to eleven bytes and multiple bytes are decoded so that the alignment of an instruction in the instruction buffer **408** is arbitrary. As instruction bytes are transferred from the instruction buffer **408** to the macroinstruction decoder **230**, the instruction buffer **408** is reloaded from the instruction cache **214**.

Instruction bytes are stored in the instruction buffer **408** with memory alignment rather than a sequential byte alignment that is suitable for application of consecutive instruction bytes to the macroinstruction decoder **230**. Therefore, a set of byte rotators **430**, **432** and **434** are interposed between the instruction buffer **408** and each of the decoders of the macroinstruction decoder **230**. Four instruction decoders, including three short decoders SDec0 **410**, SDec1 **412** or SDec2 **414**, and one combined long and vectoring decoder **418**, share the byte rotators **430**, **432** and **434**. In particular, the short decoder SDec0 **410** and the combined long and vectoring decoder **418** share byte rotator **430**. Short decoder SDec1 **412** is associated with byte rotator **432** and short decoder SDec2 **414** is associated with byte rotator **434**.

A plurality of pipeline registers, specifically instruction registers **450**, **452** and **454**, are interposed between the byte rotators **430**, **432** and **434** and the instruction decoder **220** to temporarily hold the instruction bytes, predecode bits and other information, thereby shortening the decode timing cycle. The other information held in the instruction registers **450**, **452** and **454** includes various information for assisting instruction decoding, including prefix (e.g. 0F) status, immediate size (8-bit or 32-bit), displacement and long decodable length designations.

Although a circuit is shown utilizing three rotators and three short decoders, in other embodiments, different numbers of circuit elements may be employed. For example, one circuit includes two rotators and two short decoders.

Instructions are stored in memory alignment, not instruction alignment, in the instruction cache **214**, the branch target buffer (BTB) **456** and the instruction buffer **408** so that the location of the first instruction byte is not known. The byte rotators **430**, **432** and **434** find the first byte of an instruction.

The macroinstruction decoder **230** also performs various instruction decode and exception decode operations, including validation of decode operations and selection between different types of decode operations. Functions performed during decode operations include prefix byte handling, support for vectoring to the emulation code ROM **232** for emulation of instructions, and for branch unit **234** operations, branch unit interfacing and return address prediction. Based on the instruction bytes and associated information, the macroinstruction decoder **230** generates operation information in groups of four operations corresponding to Op quads. The macroinstruction decoder **230** also generates instruction vectoring control information and emulation code control information. The macroinstruction decoder **230** also has output connections to the scheduler **260** and to the emulation ROM **232** for outputting the Op quad information, instruction vectoring control information and emulation code control information. The macroinstruction decoder **230** does not decode instructions when the scheduler **260** is unable to accept Op quads or is accepting Op quads from emulation code ROM **232**.

The macroinstruction decoder **230** has five distinct and separate decoders, including three "short" decoders SDec0 **410**, SDec1 **412** and SDec2 **414** that function in combination to decode up to three "short" decode operations of instructions that are defined within a subset of simple instructions of the x86 instruction set. Generally, a simple instruction is an instruction that translates to fewer than three operations. The short decoders SDec0 **410**, SDec1 **412** and SDec2 **414** each typically generate one or two operations, although zero operations are generated in certain cases such as prefix decodes. Accordingly for three short decode operations, from two to six operations are generated in one decode cycle. The two to six operations from the three short decoders are subsequently packed together by operation packing logic **438** into an Op quad since a maximum of four of the six operations are valid. Specifically, the three short decoders SDec0 **410**, SDec1 **412** and SDec2 **414** each attempt to decode two operations, potentially generating six operations. Only four operations may be produced at one time so that if more than four operations are produced, the operations from the short decoder SDec2 **414** are invalidated. The five decoders also include a single "long" decoder **416** and a single "vectoring" decoder **418**. The long decoder **416** decodes instructions or forms of instructions having a more complex address mode form so that more than two operations are generated and short decode handling is not available. The vectoring decoder **418** handles instructions that cannot be handled by operation of the short decoders SDec0 **410**, SDec1 **412** and SDec2 **414** or by the long decoder **416**. The vectoring decoder **418** does not actually decode an instruction, but rather vectors to a location of emulation ROM **232** for emulation of the instruction. Various exception conditions that are detected by the macroinstruction decoder **230** are also handled as a special form of vectoring decode operation. When activated, the long decoder **416** and the vectoring decoder **418** each generates a full Op quad. An Op quad generated by short decoders SDec0 **410**, SDec1 **412** and SDec2 **414** has the same format as an Op quad generated by the long and vectoring decoders **416** and **418**. The short decoder and long decoder Op quads do not include an OpSeq field. The macroinstruction decoder **230** selects either the Op quad generated by the short decoders **410**, **412** and **414** or the Op quad generated by the long decoder **416** or vectoring decoder **418** as an Op quad result of the macroinstruction decoder **230** are each decode cycle. Short decoder operation, long decoder operation and vectoring decoder operation function in parallel and independently of one another, although the results of only one decoder are used at one time.

Each of the short decoders **410**, **412** and **414** decodes up to seven instruction bytes, assuming the first byte to be an operation code (opcode) byte and the instruction to be a short decode instruction. Two operations (Ops) are generated with corresponding valid bits. Appropriate values for effective address size, effective data size, the current x86-standard B-bit, and any override operand segment register are supplied for the generation of operations dependent on these parameters. The logical address of the next "sequential" instruction to be decoded is supplied for use in generating the operations for a CALL instruction. Note that the word sequential is placed in quotation marks to indicate that, although the "sequential" address generally points to an instruction which immediately precedes the present instruction, the "sequential" address may be set to any addressed location. The current branch prediction is supplied for use in generating the operations for conditional transfer control instructions. A short decode generates control signals including indications of a transfer control instruction (for example, Jcc, LOOP, JMP, CALL), an unconditional transfer control instruction (for example, JMP, CALL), a CALL instruction, a prefix byte, a cc-dependent RegOp, and a designation of whether the instruction length is address or data size dependent. Typically one or both operations are valid, but prefix byte and JMP decodes do not generate a valid op. Invalid operations appear as valid NOOP operations to pad an Op quad.

The first short decoder **410** generates operations based on more than decoding of the instruction bytes. The first short decoder **410** also determines the presence of any prefix bytes decoded during preceding decode cycles. Various prefix bytes include 0F, address size override, operand size override, six segment override bytes, REP/REPE, REPNE and LOCK bytes. Each prefix byte affects a subsequent instruction decode in a defined way. A count of prefix bytes and a count of consecutive prefix bytes are accumulated during decoding and furnished to the first short decoder SDec0 **410** and the long decoder **416**. The consecutive prefix byte count is used to check whether an instruction being decoded is too long. Prefix byte count information is also used to control subsequent decode cycles, including checking for certain types of instruction-specific exception conditions. Prefix counts are reset or initialized at the end of each successful non-prefix decode cycle in preparation for decoding the prefix and opcode bytes of a next instruction. Prefix counts are also reinitialized when the macroinstruction decoder **230** decodes branch condition and write instruction pointer (WRIP) operations.

Prefix bytes are processed by the first short decoder **410** in the manner of one-byte short decode instructions. At most, one prefix byte is decoded in a decode cycle, a condition that is enforced through invalidation of all short decodes following the decode of a prefix byte. Effective address size, data size, operand segment register values, and the current B-bit, are supplied to the first short decoder **410** but can decode along with preceding opcodes.

The address size prefix affects a decode of a subsequent instruction both for decoding of instructions for which the generated operation depends on effective address size and for decoding of the address mode and instruction length of modr/m instructions. The default address size is specified by a currently-specified D-bit, which is effectively toggled by the occurrence of one or more address size prefixes.

The operand size prefix also affects the decode of a subsequent instruction both for decoding of instructions for which the generated operation depends on effective data size and for decoding of the instruction length. The default operand size is specified by a currently-specified x86-standard D-bit, which is effectively toggled by the occurrence of one or more operand size prefixes.

The segment override prefixes affect the decode of a subsequent instruction only in a case when the generation of a load-store operation (LdStOps) is dependent on the effective operand segment of the instruction. The default segment is DS or SS, depending on the associated general address mode, and is replaced by the segment specified by the last segment override prefix.

The REP/REPE and REPNE prefixes do not affect the decode of a subsequent instruction. If the instruction is decoded by the macroinstruction decoder **230**, rather than the emulation code ROM **232**, then any preceding REP prefixes are ignored. However, if the instruction is vectored, then the generation of the vector address is modified in some cases. Specifically, if a string instruction or particular neighboring opcode is vectored, then an indication of the occurrence of one or more of the REP prefixes and designation of the last REP prefix encountered are included in the vector address. For all other instructions the vector address is not modified and the REP prefix is ignored.

A LOCK prefix inhibits all short and long decoding except the decoding of prefix bytes, forcing the subsequent instruction to be vectored. When the vector decode cycle of this subsequent instruction occurs, so long as the subsequent instruction is not a prefix, the opcode byte is checked to ensure that the instruction is within a "lockable" subset of the instructions. If the instruction is not a lockable instruction, an exception condition is recognized and the vector address generated by the vectoring decoder **418** is replaced by an exception entry point address.

Instructions decoded by the second and third short decoders **412** and **414** do not have prefix bytes so that decoders **412** and **414** assume fixed default values for address size, data size, and operand segment register values.

Typically, the three short decoders generate four or fewer operations because three consecutive short decodes are not always performed and instructions often short decode into only a single operation. However, for the rare occurrence when more than four valid operations are generated, operation packing logic **438** inhibits or invalidates the third short decoder **414** so that only two instructions are successfully decoded and at most four operations are generated for packing into an Op quad.

When the first short decoder **410** is unsuccessful, the action of the second and third short decoders **412** and **414** are invalidated. When the second short decoder **412** is unsuccessful, the action of the third short decoder **414** is invalidated. When even the first short decode is invalid, the decode cycle becomes a long or vectoring decode cycle. In general, the macroinstruction decoder **230** attempts one or more short decodes and, if such short decodes are unsuccessful, attempts one long decode. If the long decode is unsuccessful, the macroinstruction decoder **230** performs a vectoring decode. Multiple conditions cause the short decoders **410**, **412** and **414** to be invalidated. Most generally, short decodes are invalidated when the instruction operation code (opcode) or the designated address mode of a modr/m instruction does not fall within a defined short decode or "simple" subset of instructions. This condition typically restricts short decode instructions to those operations that generate two or fewer operations. Short decodes are also invalidated when not all of the bytes in the instruction buffer **408** for a decoded instruction are valid. Also, "cc-dependent" operations, operations that are dependent on status flags, are only generated by the first short decoder **410** to ensure that these operations are not preceded by and ".cc" RegOps. A short decode is invalidated for a second of two consecutive short decodes when the immediately preceding short decode was a decode of a transfer control instruction, regardless of the direction taken. A short decode is invalidated for a second of two consecutive short decodes when the first short decode was a decode of a prefix byte. In general, a prefix code or a transfer control code inhibits further decodes in a cycle.

Furthermore, no more than sixteen instruction bytes are consumed by the macroinstruction decoder **230** since the instruction buffer **408** only holds sixteen bytes at one time. Also, at most four operations can be packed into an Op quad. These constraints only affect the third short decoder **414** since the length of each short decoded instruction is at most seven bytes and operations in excess of four only arise in the third short decoder **414**.

In a related constraint, if the current D-bit value specifies a 16-bit address and data size default, then an instruction having a length that is address and/or data dependent can only be handled by the first short decoder **410** since the predecode information is probably incorrect. Also, when multiple instruction decoding is disabled, only the first short decoder **410** is allowed to successfully decode instructions and prefix bytes.

Validation tests are controlled by short decoder validation logic (not shown) in the macroinstruction decoder **230** and are independent of the operation of short decoders **410**, **412** and **414**. However, each of the short decoders **410**, **412** and **414** does set zero, one or two valid bits depending on the number of operations decoded. These valid bits, a total of six for the three short decoders **410**, **412** and **414**, are used by the operation packing logic **438** to determine which operations to pack into an Op quad and to force invalid operations to appear as NOOP (no operation) operations. The operation packing logic **438** operates without short decoder validation information since valid short decodes and associated operations are preceded only by other valid short decodes and associated operations.

The short decoders **410**, **412** and **414** also generate a plurality of signals representing various special opcode or modr/m address mode decodes. These signals indicate whether a certain form of instruction is currently being decoded by the instruction decoder **220**. These signals are used by short decode validation logic to handle short decode validation situations.

The instruction bytes, which are stored unaligned in the instruction buffer **408**, are aligned by byte rotators **430**, **432** and **434** as the instruction bytes are transferred to the decoders **410**-**418**. The first short decoder SDec0 **410**, the long decoder **416** and the vectoring decoder **418** share a first byte rotator **430**. The second and third short decoders SDec1 **412** and SDec2 **414** use respective second and third byte rotators **432** and **434**. During each decode cycle, the three short decoders SDec0 **410**, SDec1 **412** and SDec2 **414** attempt to decode what are, most efficiently, three short decode operations using three independently-operating and parallel byte rotators **430**, **432** and **434**. Although the multiplexing by the byte rotators **430**, **432** and **434** of appropriate bytes in the instruction buffer **408** to each respective decoder SDec0 **410**, SDec1 **412** and SDec2 **414** is conceptually dependent on the preceding instruction decode operation, instruction length lookahead logic **436** uses the predecode bits to enable the decoders to operate substantially in parallel.

The long and vectoring decoders **416** and **418**, in combination, perform two parallel decodes of eleven instruction bytes, taking the first byte to be an opcode byte and generating either a long instruction decode Op quad or a vectoring decode Op quad. Information analyzed by the long and vectoring decoders **416** and **418** includes effective address size, effective data size, the current B-bit and DF-bit, any override operand segment register, and logical addresses of the next sequential and target instructions to be decoded. The long and vectoring decoders **416** and **418** generate decode signals including an instruction length excluding preceding prefix bits, a designation of whether the instruction is within the long decode subset of instructions, a RET instruction, and an effective operand segment register, based on a default implied by the modr/m address mode plus any segment override.

During a decode cycle in which none of the short decoders SDec0 **410**, SDec1 **412** and SDec2 **414** successfully decodes a short instruction, the macroinstruction decoder **230** attempts to perform a long decode using the long decoder **416**. If a long decode cannot be performed, a vectoring decode is performed. In some embodiments, the long and vectoring decoders **416** and **418** are conceptually separate and independent decoders, just as the long and vectoring decoders **416** and **418** are separate and independent of the short decoders **410**, **412** and **414**. Physically, however, the long and vectoring decoders **416** and **418** share much logic and generate similar Op quad outputs. Instructions decoded by the long decoder **416** are generally included within the short decode subset of instructions except for an address mode constraint such as that the instruction cannot be decoded by a short decoder because the instruction length is greater than seven bytes or because the address has a large displacement that would require generation of a third operation to handle to displacement. The long decoder **416** also decodes certain additional modr/m instructions that are not in the short decode subset but are sufficiently common to warrant hardware decoding. Instruction bytes for usage or decoding by the long decoder **416** are supplied from the instruction buffer **408** by the first byte rotator **430**, the same instruction multiplexer that supplies instruction bytes to the first short decoder SDec0 **410**. However, while the first short decoder SDec0 **410** receives only seven bytes, the long decoder **416** receives up to eleven consecutive instruction bytes, corresponding to the maximum length of a modr/m instruction excluding prefix bytes. Thus, the first byte rotator **430** is eleven bytes wide although only the first seven bytes are connected to the first short decoder SDec0 **410**. The long decoder **416** only decodes one instruction at a time so that associated predecode information within the instruction buffer **408** is not used and is typically invalid.

The first byte of the first byte rotator **430** is fully decoded as an opcode byte and, in the case of a modr/m instruction, the second instruction byte and possibly the third are fully decoded as modr/m and sib bytes, respectively. The existence of a 0F prefix is considered in decoding of the opcode byte. The 0F prefix byte inhibits all short decoding since all short decode instructions are non-OF or "one-byte" opcodes. Because all prefix bytes are located within the "one-byte" opcode space, decoding of a 0F prefix forces the next decode cycle to be a two-byte opcode instruction, such as a long or vectoring decode instruction. In addition to generating operations based on the decoding of modr/m and sib bytes, the first byte rotator **430** also determines the length of the instruction for usage by various program counters, whether the instruction is a modr/m instruction for inhibiting or invalidating the long decoder, and whether the instruction is an instruction within the long decode subset of operation codes (opcodes). The long decoder **416** always generates four operations and, like the short decoders **410**, **412** and **141**, presents the operations in the form of an emulation code-like Op quad, excluding an OpSeq field. The long decoder **416** handles only relatively simple modr/m instructions. A long decode Op quad has two possible forms that differ only in whether the third operation is a load operation (LdOp) or a store operation (StOp) and whether the fourth operation is a RegOp or a NOOP. A first long decode Op quad has the form:

```
LIMM        t2,<imm32>
LIMM        t1,<disp32>
LD.b/d  t8L/t8,@(<gam>)OS.a
<RegOp>  . . .
```

A second long decode Op quad has the form:

```
LIMM        t2,<imm32>
LIMM        t1,<disp32>
ST.b/d  @(<gam>),t2L/t2,OS.a
NOOP
```

The @(<gam>) address mode specification represents an address calculation corresponding to that specified by the modr/m and/or sib bytes of the instruction, for example @(AX + BX*4 + LD). The <imm32> and <disp32> values are four byte values containing the immediate and displacement instruction bytes when the decoded instruction contains such values.

The long decoder **416**, like the first short decoder **410**, generates operations taking into account the presence of any prefix bytes decoded by the short decoders during preceding decode cycles. Effective address size, data size, operand segment register values, and the current B-bit are supplied to the long decoder **416** and are used to generate operations. No indirect size or segment register specifiers are included within the final operations generated by the long decoder **416**.

Only a few conditions inhibit or invalidate an otherwise successful long decode. One such condition is an instruction operation code (opcode) that is not included in the long decode subset of instructions. A second condition is that not all of the instruction buffer **408** bytes for the decoded instruction are valid.

The vectoring decoder **418** handles instructions that are not decoded by either the short decoders or the long decoder **416**. Vectoring decodes are a default case when no short or long decoding is possible and sufficient valid bytes are available. Typically, the instructions handled by the vectoring decoder **418** are not included in the short decode or long decode subsets but also result from other conditions such as decoding being disabled or the detection of an exception condition. During normal operation, only non-short and non-long instructions are vectored. However, all instructions may be vectored. Undefined opcodes are always vectored. Only prefix bytes are always decoded. Prefix bytes are always decoded by the short decoders **410**, **412** and **414**.

When an exception condition is detected during a decode cycle, a vectoring decode is forced, generally overriding any other form of decode without regard for instruction byte validity of the decoded instruction. When a detected exception condition forces a vectoring decode cycle, the generated Op quad is undefined and the Op quad valid bit for presentation to the scheduler **260** is forced to zero. The Op quad valid bit informs the scheduler **260** that no operations are to be loaded to the scheduler **260**. As a result, no Op quad is loaded into the scheduler **260** during an exception vectoring decode cycle.

Few conditions inhibit or invalidate a vectoring decode. One such condition is that not all of the bytes in the instruction buffer **408** are valid.

When an instruction is vectored, control is transferred to an emulation code entry point. An emulation code entry point is either in internal emulation code ROM **232** or in external emulation code RAM **236**. The emulation code starting from the entry point address either emulates an instruction or initiates appropriate exception processing.

A vectoring decode cycle is properly considered a macroinstruction decoder **230** decode cycle. In the case of a vectoring decode, the macroinstruction decoder **230** generate the vectoring quad and generate the emulation code address into the emulation code ROM **232**. Following the initial vectoring decode cycle, the macroinstruction decoder **230** remains inactive while instructions are generated by the emulation code ROM **232** or emulation code RAM **236** until a return from emulation (ERET) OpSeq is encountered. The return from emulation (ERET) sequencing action transitions back to macroinstruction decoder **230** decoding. During the decode cycles following the initial vectoring decode cycle, the macroinstruction decoder **230** remains inactive, continually attempting to decode the next "sequential" instruction but having decode cycles repeatedly invalidated until after the ERET is encountered, thus waiting by default to decode the next "sequential" instruction.

Instruction bytes for usage or decoding by the vectoring decoder **418** are supplied from the instruction buffer **408** by the first byte rotator **430**, the same instruction multiplexer that supplies instruction bytes to the first short decoder SDec0 **410** and to the long decoder **416**. The vectoring decoder **418** receives up to eleven consecutive instruction bytes, corresponding to the maximum length of a modr/m instruction excluding prefix bytes. Thus, the full eleven byte width of the first byte rotator **430** is distributed to both the long decoder **416** and the vectoring decoder **418**. The predecode information within the instruction buffer **408** is not used by the vectoring decoder **418**.

As in the case of the long decoder **416**, the first byte of the first byte rotator **430** is fully decoded as an opcode byte and, in the case of a modr/m instruction, the second instruction byte and possibly the third are fully decoded as modr/m and sib bytes, respectively. The vectoring decoder **418** generates operations taking into account the presence of any prefix bytes decoded by the short decoders during preceding decode cycles. The existence of a 0F prefix is considered in decoding of the opcode byte. In addition to generating operations based on the decoding of modr/m and sib bytes, the first byte rotator **430** also determines the length of the instruction for usage by various program counters, whether the instruction is a modr/m instruction for inhibiting or invalidating the long decoder, and whether the instruction is an instruction within the long decode subset of operation codes (opcodes). If not, a vectoring decode is initiated. Effective address size. data size and operand segment register values are supplied to the vectoring decoder **418** and are used to generate operations. No indirect size or segment register specifiers are included within the final operations generated by the vectoring decoder **418**.

During a vectoring decode cycle, the vectoring decoder **418** generates a vectoring Op quad, generates an emulation code entry point or vector address, and initializes an emulation environment. The vectoring Op quad is specified to pass various information to initialize emulation environment scratch registers.

The value of the emulation code entry point or vector address is based on a decode of the first and second instruction bytes, for example the opcode and modr/m bytes, plus other information such as the presence of an 0F prefix, a REP prefix or the like. In the case of vectoring caused by an exception condition, the entry point or vector address is based on a simple encoded exception identifier.

The emulation environment is stored for resolving environment dependencies. All of the short decoders **410**, **412** and **414** and long decoder **416** directly resolve environmental dependencies, such as dependencies upon effective address and data sizes, as operations are generated so that these operations never contain indirect size or register specifiers. However, emulation code operations do refer to such effective address and data size values for a particular instance of the instruction being emulated. The emulation environment is used to store this additional information relating to the particular instruction that is vectored. This information includes general register numbers, effective address and data sizes, an effective operand segment register number, the prefix byte count, and a record of the existence of a LOCK prefix. The emulation environment also loads a modr/m reg field and a modr/m regm field are loaded into Reg and Regm registers. The emulation environment is initialized at the end of a successful vectoring decode cycle and remains at the initial state for substantially the duration of the emulation of an instruction by emulation code, until an ERET code is encountered.

The vectoring decoder **418** generates four operations of an Op quad in one of four forms. All four forms include three LIMM operations. The four forms differ only in the immediate values of the LIMM operations and in whether the third operation is an LEA operation or a NOOP operation.

A first vectoring decode Op quad has the form:

```
LIMM        t2,<imm32>
LIMM        t1,<disp32>
LEA         t6,@(<gam>),_.a
LIMM        t7,LogSeqDecPC[31..0]//logical seq. next
                                         //instr. PC
```

A second vectoring decode Op quad has the form:

```
LIMM        t2,<imm32>
LIMM        t1,<disp32>
NOOP
LIMM        t7,LogSeqDecPC[31..0]
```

A third vectoring decode Op quad has the form:

```
LIMM        t2,<+/- 1/2/4>     //equiv to "LDK(D)S t2,+1/+2"
LIMM        t1,<+/- 2/4/8> //equiv to "LDK(D)S t1,+2/+4"
NOOP
LIMM        t7,LogSeqDecPC[31..0]
```

A fourth vectoring decode Op quad has the form:

```
LIMM        t2,<+2/4>               //equiv to "LDKD t2,+2"
LIMM        t1,<disp32>
LD          t6,@(SP),SS.s
LIMM        t7,LogSeqDecPC[31..0]
                                    //predicted RET target adr
                                    //from Return Address Stack
```

The first two forms of vectoring Op quads apply for most opcodes. The first form is used for memory-referencing modr/m instructions for which the LEA operation is used to compute and load a general address mode effective operand address into a treg. The second form is used for non-modr/m and register-referencing modr/m instructions. For instructions having the second form no address is necessarily computed, although the <imm32> and <disp32> values remain useful insofar as they contain instruction bytes following the opcode byte. The third form of vectoring Op quad is used for all string instructions plus some neighboring non-modr/m instructions. A fourth form of vectoring Op quad supports special vectoring and emulation requirements for near RET instructions.

The macroinstruction decoder **230** has four program counters, including three decode program counters **420**, **422** and **424**, and one fetch program counter **426**. A first decode program counter, called an instruction PC **420**, is the logical address of the first byte, including any prefix bytes, of either the current instruction being decoded or, if no instruction is currently decoding, the next instruction to be decoded. If the decode operation is a multiple instruction decode, instruction PC **420** points to the first instruction of the multiple instructions to be decoded. The instruction PC **420** corresponds to the architectural address of an instruction and is used to generate instruction fault program counters for handling of exceptions. The instruction PC **420** is passed down the scheduler **260** with corresponding Op quads and is used by an operation commit unit (OCU) (not shown) of the scheduler **260** to produce instruction fault program counters to be saved during exception processing. When an Op quad is generated by the macroinstruction decoder **230**. the current instruction PC **420** value is tagged to the Op quad and loaded into the Scheduler **260** Op quad entry along with the Op quad. A second decode program counter, called a logical decode PC **422**, is the logical address of the next instruction byte to be decoded and addresses either an opcode byte or a prefix byte. A third decode program counter, called a linear decode PC **424**, is the linear address of the next instruction byte to be decoded and addresses either an opcode byte or a prefix byte. The logical decode PC **422** and the linear decode PC **424** point to the same instruction byte. The linear decode PC **424** designates the address of the instruction byte currently at the first byte rotator **430**.

The various decoders in the macroinstruction decoder **230** function on the basis of decoding or consuming either prefix bytes or whole instructions minus any prefix bytes so that prefixes are generally handled as one-byte instructions. Therefore, the address boundaries between instruction and prefix byte decodes are more important than instruction boundaries alone. Consequently, at the beginning of each decode cycle, the next instruction byte to be decoded is not necessarily the true beginning of an instruction.

At the beginning of a decode cycle the logical decode PC **422** and the linear decode PC **424** contain the logical and linear addresses of the next instruction to be decoded, either an instruction or a prefix byte. The linear decode PC **424** is a primary program counter value that is used during the decoding process to access the instruction buffer **408**. The linear decode PC **424** represents the starting point for the decode of a cycle and specifically controls the byte rotator feeding bytes from the instruction buffer **408** to the first short decoder **410** and to the long and vectoring decoders **416** and **418**. The linear decode PC **424** also is the reference point for determining the instruction addresses of any further short decode instructions or prefix bytes, thus generating control signals for the byte rotators feeding the second and third short decoders **412** and **414**.

The linear decode PC **424** also acts secondarily to check for breakpoint matches during the first decode cycles of new instructions, before prefix bytes are decoded, and to check for code segment overruns by the macroinstruction decoder **230** during successful instruction decode cycles.

The logical decode PC **422** is used for program counter-related transfer control instructions, including CALL instructions. The logical decode PC **422** is supplied to the branch unit **234** to be summed with the displacement value of a PC-relative transfer control instruction to calculate a branch target address. The logical decode PC **422** also supports emulation code emulation of instructions. The next sequential logical decode program counter (PC) **422** is available in emulation code from storage in a temporary register by the vectoring Op quad for general usage. For example, the next sequential logical decode PC **422** is used to supply a return address that a CALL instruction pushes on a stack.

A next logical decode PC **428** is set to the next sequential logical decode program counter value and has functional utility beyond that of the logical decode PC **422**. The next logical decode PC **428** directly furnishes the return address for CALL instructions decoded by the macroinstruction decoder **230**. The next logical decode PC **428** also is passed to emulation code logic during vectoring decode cycles via one of the operations within the vectoring Op quad.

During a decode cycle, the linear decode PC **424** points to the next instruction bytes to be decoded. The four least significant bits of linear decode PC **424** point to the first instruction byte within the instruction buffer **408** and thereby directly indicate the amount of byte rotation necessary to align the first and subsequent instruction bytes in the instruction cache **214**. The first byte rotator **430** is an instructíon multiplexer, specifically a 16:1 byte multiplexer, for accessing bytes in the instruction buffer **408** that are offset by the linear decode PC **424** amount. The first byte rotator **430** is seven bytes wide for the first short decoder SDec0 **410** and eleven bytes wide for the long decoder **416** and the vectoring decoder **418** in combination. Shared logic in the first short decoder SDec0 **410**, the long decoder **416** and the vectoring decoder **418** generate a first instruction length value ILen0 for the first instruction. The second and third byte rotators **432** and **434** are seven byte-wide instruction multiplexers, specifically 16:1 byte multiplexers. The second byte rotator **432** accesses bytes in the instruction buffer **408** that are offset by the sum of the linear decode PC **424** amount and the first instruction length ILen0. Logic in the second short decoder SDec0 **412** generate a second instruction length value ILen1 for the second instruction. The third byte rotator **434** accesses bytes in the instruction buffer **408** that are offset by the sum of the linear decode PC **424** amount and the first and second instruction lengths ILen0 and ILen1. The byte rotators **430**, **432** and **434** multiplex instruction bytes but not predecode bits. The byte rotators **430**, **432** and **434** are controlled using predecode information in which the predecode bits associated with the first opcode byte or the first byte of the first instruction directly controls the second rotator **432**. The first byte of the second instruction directly controls the third rotator **434**. Each predecode code implies an instruction length but what is applied to the next rotator is a pointer. The pointer is derived by taking the four least significant bits of the program counter at the present instruction plus the length to attain the program counter to the next instruction.

The first and second short decoders SDec0 **410** and SDec1 **412** do generate the instruction byte lengths ILen0 and ILen1 as a matter of course so that the process of decoding multiple short decode instructions occurs serially. However, such serial processing is unacceptable for achieving a desired decoding speed. To hasten the decoding process, the three short decoders SDec0 **410**, SDec1 **412** or SDec2 **414** are operated in parallel by including separate instruction length lookahead logic that quickly, although serially, determines the instruction lengths ILen0 and ILenl using the predecode bits associated with the instruction bytes in each instruction buffer **408**.

The predecode bits associated with each instruction byte in the instruction buffer **408** are the ILen bits specifying the length of an instruction starting with that byte. A parameter more useful than ILen for computation by lookahead logic is the value ILenO plus linear decode PC **424** (mod 16) and the value ILen0 plus ILen1 plus linear decode PC **424** (mod 16). Consequently, the four instruction length predecode bits of the six predecode bits associated with each instruction byte in the instruction buffer **408** are set to point to the first byte of the next instruction assuming that this byte is the opcode byte which begins an instruction. As a result, the predecode bits associated with the first opcode byte multiplexed by the first byte rotator **430** and applied to the first short decoder SDec0 **410** directly specify the instruction buffer **408** byte index of the first opcode byte for the second short decoder SDec1 **412**. The predecode bits associated with the second opcode byte multiplexed by the second byte rotator **432** and applied to the second short decoder SDec1 **412** directly specify the instruction buffer **408** byte index of the first opcode byte for the third short decoder SDec2 **414**. The instruction lookahead logic includes two four-bit-wide 16:1 multiplexers which produce instruction buffer **408** index bits for the multiplexers of second and third byte rotators **432** and **434**. Structurally, all of the instruction buffer **408** predecode bits are connected separately from the instruction buffer **408** instruction bytes. The predecode bits are used solely by the lookahead logic. The instruction bytes are applied to the instruction multiplexers of the short decoders **410**, **412** and **414**.

The instruction lookahead logic also includes logic for determining whether sets of predecode bits used during decode cycle are valid. Specifically, the instruction lookahead logic determines whether an instruction byte is the first byte of a valid short decode instruction. If the predecode bits for a particular byte in the instruction buffer **408** point to the particular byte, implying a zero instruction length for an instruction starting at the location of the particular byte, then that byte is not the start of a short decode instruction and no further short decoding is possible. Otherwise, a short decode operation is possible and the predecode bits point to the beginning of the next instruction.

The following pseudo-RTL description summarizes the structure and functionality of the instruction buffer **408** (IBuf), the instruction multiplexers (IMux), the instruction lookahead and multiplexer control logic, and the multiplexer connections to the different instruction decoders. The instruction buffer **408** is IBuf, including instruction bytes IByte[8] and predecode bits PreDec[4]. The linear decode PC **424** is DecPC[3..0].

```
struct ExtIByte{
        IByte[8]
        PreDec[4]
} IBuf[16]

IBIndex0[3..0] = DecPC[3..0]
IBIndex1[3..0] = IBuf[IBIndex0[]].PreDec[]
IBIndex2[3..0] = IBuf[IBIndex1[]].PreDec[]
IBIndex3[3..0] = IBuf[IBIndex2[]].PreDec[]

Index0V = ~(IBIndex1[2..0] = IBIndex0[2..0])
Index1V = ~(IBIndex2[2..0] = IBIndex1[2..0])
Index2V = ~(IBIndex3[2..0] = IBIndex2[2..0])

for (i=0..10)
        IMux0[i][] = IBuf[(IBIndex0[]+i) mod 16].IByte[]
        LVOpQuad...             = LongVecDecode(IMux0[10..0][])
        SDecOp0[],SDecOp1[],... = ShortDecode(IMux0[6..0][])

for (i=0..6)
        IMux1[i][] = IBuf[(IBIndex1[]+i) mod 16].IByte[]
        SDecOp2[],SDecOp3[],... = ShortDecode(IMux1[6..0][])


for (i=0..6)
        IMux2[i][] = IBuf[(IBIndex2[]+i) mod 16].IByte[]
        SDecOp4[],SDecOp5[],... = ShortDecode(IMux2[6..0][])
```

The short decoders SDec0 **410**, SDec1 **412** or SDec2 **414** each generate up to two Ops. The long and vectoring decoder **418** generates a full Op quad. The six Ops from the three short decoders SDec0 **410**, SDec1 **412** or SDec2 **414** are subsequently packed together by Op packing logic into a proper Op quad having at most four of the Ops which are guaranteed to be valid.

Either the Op quad generated by the short decoders or the Op quad generated by the long/vectoring decoder is chosen as the Op quad result of the macroinstruction decoder **230** for a decode cycle.

The instruction buffer **408** is accessed on a byte basis by instruction multiplexers of the macroinstruction decoder **230**, but the instruction buffer **408** is managed on an instruction word basis each decode cycle for tracking validity of instruction bytes in the instruction buffer **408** and for determining which instruction bytes of the instruction buffer **408** are to be reloaded with new instruction bytes from the instruction cache **214**. The predecode information is also used to determine whether the instruction bytes that are decoded and used by each decoder within the macroinstruction decoder **230** decoder are valid. When an instruction byte is not valid, an invalid valid signal is asserted and applied to decoder validation logic (not shown) associated with that decoder.

Control of updating of the current fetch PC **426**, which is used to address the next instruction cache **214** access, is synchronized closely with the consumption of valid instruction bytes by the various decoders within the instruction buffer **270**. In this manner, control of updating of the current fetch PC **426** is also managed by the control logic (not shown) within the instruction buffer **408**. Control logic within the instruction buffer **408** is described in pseudo-RTL as follows:

```
struct ExtIByte {
  IByte[8]
  PreDec[4]
} IBuf[16]
```

Instruction buffer **408** word validity signals are described as follows:

$$IBufEmpty = \sim(FetchPC[4] \wedge DecPC[4]) + \sim DEC\_ValidIF$$
$$FullFetch = ('b00 = FetchPC[3..2])$$

$$IB0V = \sim IBufEmpty \ (\sim FullFetch + ('b00 >= DecPC[3..2]))$$
$$= \sim IBufEmpty \ (\sim FullFetch + ('b00 = DecPC[3..2]))$$

$$IB1V = \sim IBufEmpty \ (\sim FullFetch + ('b01 >= DecPC[3..2]))$$
$$= \sim IBufEmpty \ (\sim FullFetch + \sim DecPC[3])$$

$$IB2V = \sim IBufEmpty \ (\sim FullFetch + ('b10 >= DecPC[3..2]))$$
$$= \sim IBufEmpty \ (\sim FullFetch + \sim('b11 = DecPC[3..2]))$$

$$IB3V = \sim IBufEmpty \ (\sim FullFetch + ('b11 >= DecPC[3..2]))$$
$$= \sim IBufEmpty$$

Wraparound is detected within the instruction buffer **408** in response to collective instruction byte consumption of the short decoders in logic functionally described as follows in pseudo-RTL:

DecPCWrap = (SeqDecPC[3..2] < DecPC[3..2])

Instruction buffer **408** word load control signals are described as follows:

LoadIB0 = ~IB0V + DecTakenXC + DecInstr majority(('b00 >= DecPC[3..2]),
                                      ('b00 < SeqDecPC[3..2]),DecPCWrap)
= ~IB0V + DecTakenXC + DecInstr majority(('b00 = DecPC[3..2]),
                                     ~('b00 = SeqDecPC[3..2]),DecPCWrap)

LoadIB1 = ~IB1V + DecTakenXC + DecInstr majority(('b01 >= DecPC[3..2]),
                                      ('b01 < SeqDecPC[3..2]),DecPCWrap)
= ~IB1V + DecTakenXC +
                DecInstr majority(~DecPC[3],SeqDecPC[3],DecPCWrap)

LoadIB2 = ~IB2V + DecTakenXC + DecInstr majority(('b10 >= DecPC[3..2]),
                                      ('b10 < SeqDecPC[3..2]),DecPCWrap)
= ~IB2V + DecTakenXC + DecInstr majority(~('b11 = DecPC[3..2]),
                                      ('b11 = SeqDecPC[3..2]),DecPCWrap)

LoadIB3 = ~IB3V + DecTakenXC + DecInstr majority(('b11 >= DecPC[3..2]),
                                      ('b11 < SeqDecPC[3..2]),DecPCWrap)
= ~IB3V + DecTakenXC + DecInstr DecPCWrap

Loading of the instruction buffer **408** is described by the following pseudo-RTL:

```
@clk: if (LoadIB0) IBuf[3..0]   = IBufIn[3..0]
@clk: if (LoadIB1) IBuf[7..4]   = IBufIn[7..4]
@clk: if (LoadIB2) IBuf[11..8]  = IBufIn[11..8]
@clk: if (LoadIB3) IBuf[15..12] = IBufIn[15..12]
```

Valid instruction byte signals that are indicative of valid bytes received from the instruction buffer **408** are described for each decoder in the instruction decoder **270** as follows:

IBufS0V = ~IBufEmpty ( (IBIndex1[3..2] < FetchPC[3..2]) +
                             (IBIndex1[3..2] >= IBIndex0[3..2]) )

IBufS1V = ~IBufEmpty majority( IBIndex1[3..2] >= FetchPC[3..2],
                                 IBIndex2[3..2] < FetchPC[3..2],
                                 IBIndex2[3..2] >= IBIndex1[3..2] )

IBufS2V = ~IBufEmpty majority( IBIndex2[3..2] >= FetchPC[3..2],
                                   IBIndex3[3..2] < FetchPC[3..2],
                                   IBIndex3[3..2] >= IBIndex2[3..2] )

IBufLVV = ~IBufEmpty ( (LVSeqDecPC[3..2] >= DecPC[3..2]) +
                             (LVSeqDecPC[3..2] < FetchPC[3..2]) )

A valid bit relating to requests of the instruction fetch control circuit **218** is evaluated as follows:

```
@clk: if (SC_Vec2Dec + RUX_WrIP + ERM_StopIF + IC_StopIF + SI_Reset)
       DEC_ValidIF = (SC_Vec2Dec + RUX_WrIP) ~SI_Reset
```

A valid bit for instruction bytes received from the instruction cache **214** is evaluated as follows:

$$IFetchV = DEC\_ValidIF \sim IC\_HoldIF \sim ITB\_HoldIF \sim ITB\_PgViol \&$$

$$\sim(EmcMode \; DEC\_ExtEmc)$$

A next sequential fetch PC value is evaluated as follows:

$$SeqFetchPC[31..4] = (IBufEmpty + DecPCWrap \; DecInstr) \; ? \; FetchPC[31..4]+1$$
$$: FetchPC[31..4]$$
$$SeqFetchPC[3..2] = if \; ( \; (IBufEmpty + DecPCWrap \; DecInstr) \; FetchPC[4] \; )$$
$$'b00$$
$$else$$
$$(IBufEmpty + \sim DecInstr) \; ? \; DecPC[3..2]$$
$$: SeqDecPC[3..2]$$

A new fetch PC value having two least significant bits invariably set to 'b00 is evaluated as follows:

$$DEC\_NextFetchAddr[31..2] = if \; (SC\_Vec2Dec + RUX\_WrIP +$$
$$DecTakenXC \sim BtbHit + DecRetXC)$$
$$NewDecPC[31..2]$$
$$elseif \; (DecTakenXC \; BtbHit)$$
$$BtbFetchAddr[31..2]$$
$$elseif \; (IFetchV)$$
$$SeqFetchPC[31..2]$$
$$else$$
$$FetchPC[31..2]$$
$$@clk: FetchPC[31..2] = DEC\_NextFetchAddr[31..2]$$

A processor typically operates by transferring program instructions from a memory into instruction registers, then decoding and executing the instructions. Execution speed of a processor is improved by transferring, decoding and executing more than one instruction at a time. In some processors, all instructions are the same length and transferring of data from memory for decoding is simple because the memory locations of all instructions are readily determined, allowing several instructions to be simultaneously transferred into several instruction registers. However, x86 instructions have variable lengths so that each instruction must typically be decoded to determine the instruction length before the starting location of the next decodable instruction is ascertainable, making the locating of instructions a slow, sequential process. To allow simultaneous decoding of multiple variable-length instructions, the predecoder **270** includes logic for preparing instructions for rapid decoding. Predecoder **270** determines and stores in the instruction cache **214**, for many instruction bytes, the location of the next succeeding instruction by assuming that each instruction byte is the first byte of an instruction. When instructions are transferred from the instruction cache **214**, logic for preparing instructions for rapid decoding locates the actual first byte of an instruction so that several subsequent instructions are rapidly located and allowing simultaneous loading of instructions into a plurality of instruction registers for simultaneous decoding and execution.

When instruction bytes are loaded from main memory **130** into the instruction cache **214**, a preliminary decode operation of these instruction bytes is performed to generate additional bits that are stored with each instruction byte in the instruction cache **214**. The predecode bits are fetched in combination with the associated instruction bytes, loaded into the instruction buffer **408**, and subsequently used to facilitate the processing of simultaneous decoding of multiple instruction bytes. A pseudo-RTL declaration summarizes this aspect of the instruction cache **214** tag RAM and data RAM entries, as follows:

```
struct ExtICByte {
    IByte[8]
    PreDec[3]
} IDataEntry[64]
```

Predecode bits associated with each instruction byte serve to locate the next instruction boundary relative to an opcode byte. Prefix bytes are decoded in the form of single-byte long "instructions". Bits of the prefix bytes are used directly by instruction lookahead logic to generate the control signals for instruction multiplexers feeding the instruction decoders. More specifically, the following two values are quickly computed by the lookahead logic:

(DecPC[3..0]+ILen0) mod 16
(DecPC[3..0]+ILen0+ILen1) mod 16

where DecPC[3:0] is the linear decode PC **424**, ILen0 is the instruction length of the instruction applied to the first short decoder SDec0 **410** and ILen is the instruction length of the instruction applied to the second short decoder SDec1 **412**. In some embodiments, both ILen0 and ILen1 are calculated for every instruction byte in the instruction buffer **408** when instruction bytes are first loaded into the instruction buffer **408**. Because instruction bytes are stored in the instruction buffer **408** with memory-alignment, the calculation of ILenO and ILen1 are possible very early in the instruction processing path. In particular, the ILen0 and ILen1 are performed when the associated instruction bytes are loaded into the instruction cache **214** and the resulting ILen0 and ILen1 values are stored in the instruction cache **214** as predecode bits. The instruction byte in the instruction buffer **408** is indexed by Linear decode PC **424** and has a fixed value for the low four bits of the instruction byte memory address which is equal to linear decode PC **424**. The instruction length ILen of an instruction starting with an opcode byte equal to linear decode PC **424** is calculated solely on the basis of the opcode byte or, in some cases, on the basis of the opcode byte and the next byte following the opcode byte.

The instruction buffer **408** index of the first byte of the next instruction is ILen plus a constant (mod 16), specifically (DecPC[3..0]+ILen0) mod 16. The computation of (DecPC[3..0]+ILen0+ILen1) mod 16 results simply from taking the value (DecPC[3..0]+ILen0) mod 16. which is generated by the first computation indexed by (DecPC[3..0] +ILen0) mod 16. In this manner, only (DecPC[3..0]+ILen0) mod 16 is computed for each instruction byte and becomes the predecode value for the instruction byte.

Instruction bytes are loaded into the instruction cache **214** during cache fills sixteen bytes at a time so that predecode logic is replicated sixteen times and predecode bits for all sixteen bytes are calculated simultaneously immediately before the sixteen bytes are written into the data RAM of the instruction cache **214**. Predecode logic effectively adds an extra half cycle to the miss/fill latency of the instruction cache **214**.

Each of the sixteen sets of predecode logic. one set for each instruction byte loaded into the instruction cache **214**, examines the associated instruction byte plus, for instruction bytes equal to some opcodes, the following one or two instruction bytes. The first instruction byte is decoded as an opcode byte, regardless of whether the byte actually is an opcode. If the first instruction byte is a modr/m opcode, the second and third instruction bytes are decoded as modr/m and sib bytes. Based on these three bytes alone, the length ILen of the instruction is determined and the instruction is assigned to be inside or outside the subset of short decode instructions of the instruction set. For some opcodes, the short decode instruction subset is defined by the opcode byte alone. For modr/m opcodes, the short decode instruction subset is specified by the opcode byte in combination with the modr/m and sib bytes. A fixed value of the four memory byte address least significant bits corresponding to a particular set of predecode logic (mod 16) is added to the computed length ILen to determine the predecode expression, (DecPC[3..0]+ILen0) mod 16. If the opcode is, in fact, a short decode instruction opcode, then the resulting four-bit value is assigned as the predecode bits that are loaded into the instruction cache **214**. Otherwise, the fixed four-bit memory address least significant bit value for the instruction byte is used as the predecode bits as though the instruction length was zero.

Predecode information is only used to facilitate the decoding of multiple short decode instructions, therefore instruction length is determined accurately only for short decode instructions. The length of all short decode instructions ranges from one to seven bytes. For instructions that are not short decode instructions, the predecoder **270** specifies an effective instruction length of zero to enable the instruction lookahead logic to quickly and easily determine the validity of the predecode information that is calculated during each decode cycle. In particular, instruction lookahead logic compares the values of the predecode bits and the fixed address least significant bits for an instruction byte in the instruction buffer **408**. If the values match, then the instruction byte is not the starting byte of a short decode instruction.

Short decode instructions are never longer than seven bytes so that the difference between the four predecode bits and the fixed byte address least significant bit values is never more than seven bytes. Accordingly only three instruction length predecode bits of six total predecode bits are stored in the instruction cache **214** because the most significant bit is readily reconstructed from the least significant three bits plus the associated fixed byte address least significant bit value. The reconstruction or expansion of the three instruction length predecode bits into four bits is performed as instruction bytes are fetched from the instruction cache **214** and loaded into the instruction buffer **408**. More specifically, the instruction buffer **408** includes input circuitry with sixteen sets of predecode expansion logic which independently and simultaneously expand the predecode bit values associated with all sixteen instruction bytes transferred from the instruction cache **214**.

For the final two bytes of the sixteen bytes that are predecoded and loaded into the instruction cache **214**, only one and two bytes are available for examination by the predecode logic. For non-modr/m opcodes a full predecode analysis is possible. However, for modr/m opcodes the full instruction length cannot be determined. Consequently, predecode logic for bytes 14 and 15. having address least significant bits of 1110 and 1111 respectively, are modified versions of the predecode logic associated with the byte 0 through 13. For byte 15, an effective instruction length of zero is forced for all modr/m opcodes as well as for non-short decode instructions. For byte 14, an effective instruction length of zero is forced for non-short decode instructions and for modr/m opcodes having an address mode which requires examination of a sib byte to reliably determine instruction length.

Various uncertainties arise in the predecoding process. For example, a prefix byte having a hexidecimal value of 0F may be included in the instruction byte stream. Also uncertainty concerning the effective address and operand sizes arises due to the possible presence of a prefix byte and a possible difference between the D bit value in effect at cache fill time and the D bit value in effect when the predecode information is used at decode time. Predecode logic addresses these uncertainties by handling the instruction bytes under the assumption that the opcode byte is, in fact, a one byte opcode, and that the effective address and operand sizes are both 32 bits. This assumption results in appropriate handling of a prefix byte in the same manner as handling of a long and vectoring decode so that no pre-decode information is used. With regard to the variable D-bit value, the assumption that the instruction byte is actually a one byte opcode leads to appropriate handling because, when the D-bit value in effect during a decode cycle indicates a sixteen-bit address, decoding of multiple instructions by the short decoder is inhibited. The proper effective address and operand size are used by the first short decoder SDec0 **410** but associated predecode information is not used. The effective address sizes for the second and third short decoders SDec1 **412** and SDec2 **414** always match the current D-bit value.

The following pseudo-RTL description summarizes logic within the predecoder **270** logic for one instruction byte channel of the sixteen instruction byte channels. Logic in the predecoder **270** examines each of sixteen instruction bytes prior to loading into the instruction cache **214** and determines, for each instruction byte independently of the other instruction bytes, a three-bit predecode value. The three-bit predecode value is determined on the basis of a calculation of two values, ShortI and SILen[2..0], from a predecode operation performed on each instruction byte and the immediately following one or two instruction bytes. For the final two instruction bytes, bytes 14 and 15, of a group of sixteen instruction bytes, a reduced predecode operation employing analysis of only one or two instruction bytes is performed. The values Short1 and SILen[2..0] specify whether the instruction byte, as an opcode byte, is included within the short decode subset of instructions. If the instruction is a short decode instruction, then the values ShortI and SILen[2..0] also specify the length, in bytes, of the short decode instruction.

In this description a ShortI function applies to fully decode opcode, modr/m, and sib bytes for all short decode cases, excluding the determination of sib address modes for instruction byte fourteen of the sixteen instruction byte channels and excluding all modr/m opcodes for instruction byte fifteen. In contrast, the SILen[2..0] function applies to partially decode opcode, modr/m and sib bytes using non-short decode opcode and address mode cases as don't cares. Instruction length is determined using the SILen function.

```
if (ShortI)
  PreDec[2..0] = FixedAddr[2..0] + SILen[2..0]
else
  PreDec[2..0] = FixedAddr[2..0]
```

Here, FixedAddr is equal to i for instruction byte i.

The following pseudo-RTL description summarizes the pre-decode expansion logic:

```
if (PreDec[2..0] < FixedAddr[2..0])
  PreDec[3] = ~FixedAddr[3]
else
  PreDec[3] = FixedAddr[3]
```

The predecoder **270** may be implemented using various circuits, methods and techniques, including conventional logic circuits. To most simply express the function of the predecoder **270** a functional definition is given in terms of a lookup table and a small amount of additional logic. The lookup table includes 512 entries and is indexed by the first opcode byte plus an additional signal that is decoded from part of a byte following the first opcode byte. Each entry contains the following fields: ILen[2..0], ShortIV, Modrm, NoLrgDisp, and OnlySubOpc7. The ILen field directly furnishes the instruction length value for non-modr/m instructions. For modr/m instructions, the ILen field in combination with an address mode-dependent value, furnishes the instruction length value. Final SILen[2..0] values range from 1 to 7 bytes for valid short decode instructions. The ShortIV field largely indicates whether the byte is a short decode instruction. The Modrm field is used to gate or mask ShortIV for the sixteenth byte. Other fields represent additional constraints, in the case of modr/m opcodes, relating to whether the particular address mode or sub-opcode of the instruction is acceptable in conjunction with that opcode.

The following table designates table entries potentially corresponding to the short decode instructions. Non-short decode instruction table entries have undefined field values except for ShortIV=0. Equations following the table define the computation of the final, effective ShortI signal in response to input signals including three predecoded bytes, Opc0[7..0], Opc1[7..0], and Opc2[7..0]. For the fifteenth and sixteenth bytes, the third byte Opc2 or the second and third bytes Opcl and Opc2, respectively, correspond to existing bytes having values that are not previously defined.

```
RegModrm = (Opc1[7..6] = 'b11)
TableIndex[8..0] = {Opc0[7..0],RegModrm}
struct {
    ILen[3]
    ShortIV
    Modrm
    NoLrgDisp
} PreDecTable[512]
```

| Entry # | ILen | Short IV | Modr m | NoLrg Disp | Instruction Mnemonic |
|---|---|---|---|---|---|
| 02,0 | 2+ | 1 | 1 | 1 | ADD reg8,m8 |
| 02,1 | 2 | 1 | 1 | 0 | ADD reg8,r8 |
| 03,0 | 2+ | 1 | 1 | 1 | ADD reg32,m32 |
| 03,1 | 2 | 1 | 1 | 0 | ADD reg32,r32 |
| 04.x | 2 | 1 | 0 | x | ADD AL,imm8 |
| 05,x | 5 | 1 | 0 | x | ADD AX, imm32 |
| 0A,0 | 2+ | 1 | 1 | 1 | OR reg8,m8 |
| 0A.1 | 2 | 1 | 1 | 0 | OR reg8,r8 |
| 0B,0 | 2+ | 1 | 1 | 1 | OR reg32,m32 |
| 0B,1 | 2 | 1 | 1 | 0 | OR reg32,r32 |
| 0C,x | 2 | 1 | 0 | x | OR AL,imm8 |
| 0D,x | 5 | 1 | 0 | x | OR AX,imm32 |
| 0F,x | 1 | 1 | 0 | x | 0F prefix |
| 12,0 | 2+ | 1 | 1 | 1 | ADC reg8,m8 |
| 12,1 | 2 | 1 | 1 | 0 | ADC reg8,r8 |
| 13,0 | 2+ | 1 | 1 | 1 | ADC reg32,m32 |
| 13,1 | 2 | 1 | 1 | 0 | ADC reg32,r32 |
| 14,x | 2 | 1 | 0 | x | ADC AL,imm8 |
| 15,x | 5 | 1 | 0 | x | ADC AX, imm32 |
| 1A,0 | 2+ | 1 | 1 | 1 | SBB reg8,m8 |
| 1A,1 | 2 | 1 | 1 | 0 | SBB reg8,r8 |
| 1B,0 | 2+ | 1 | 1 | 1 | SBB reg32,m32 |
| 1B,1 | 2 | 1 | 1 | 0 | SBB reg32,r32 |
| 1C,x | 2 | 1 | 0 | x | SBB AL,imm8 |
| 1D,x | 5 | 1 | 0 | x | SBB AX, imm32 |
| 22,0 | 2+ | 1 | 1 | 1 | AND reg8,m8 |
| 22,1 | 2 | 1 | 1 | 0 | AND reg8,r8 |
| 23,0 | 2+ | 1 | 1 | 1 | AND reg32,m32 |
| 23,1 | 2 | 1 | 1 | 0 | AND reg32,r32 |
| 24,x | 2 | 1 | 0 | x | AND AL,imm8 |

(continued)

| Entry # | ILen | Short IV | Modrm | NoLrg Disp | Instruction Mnemonic |
|---|---|---|---|---|---|
| 25,x | 5 | 1 | 0 | x | AND AX, imm32 |
| 26,x | 1 | 1 | 1 | 1 | ES prefix |
| 2A,0 | 2+ | 1 | 1 | 1 | SUB reg8,m8 |
| 2A,1 | 2 | 1 | 1 | 0 | SUB reg8,r8 |
| 2B,0 | 2+ | 1 | 1 | 1 | SUB reg32,m32 |
| 2B,1 | 2 | 1 | 1 | 0 | SUB reg32,r32 |
| 2C,x | 2 | 1 | 0 | x | SUB AL,imm8 |

| Entry # | ILen | Short IV | Modrm | NoLrg Disp | Instruction Mnemonic |
|---|---|---|---|---|---|
| 2D,x | 5 | 1 | 0 | x | SUB AX, imm32 |
| 2E,x | 1 | 1 | 1 | 1 | CS prefix |
| 32,0 | 2+ | 1 | 1 | 1 | XOR reg8,m8 |
| 32,1 | 2 | 1 | 1 | 0 | XOR reg8,r8 |
| 33,0 | 2+ | 1 | 1 | 1 | XOR reg32,m32 |
| 33,1 | 2 | 1 | 1 | 0 | XOR reg32,r32 |
| 34,x | 2 | 1 | 0 | x | XOR AL,imm8 |
| 35,x | 5 | 1 | 0 | x | XOR AX,imm32 |
| 36,x | 1 | 1 | 0 | x | SS prefix |
| 3A,0 | 2+ | 1 | 1 | 1 | CMP reg8,m8 |
| 3A,1 | 2 | 1 | 1 | 0 | CMP reg8,r8 |
| 3B,0 | 2+ | 1 | 1 | 1 | CMP reg32,m32 |
| 3B,1 | 2 | 1 | 1 | 0 | CMP reg32,r32 |
| 3C,x | 2 | 1 | 0 | x | CMP AL,imm8 |
| 3D,x | 5 | 1 | 0 | x | CMP AX,imm32 |
| 3E,x | 1 | 1 | 0 | x | DS prefix |
| 40,x | 1 | 1 | 0 | x | INC reg |
| 41,x | 1 | 1 | 0 | x | INC reg |
| 42,x | 1 | 1 | 0 | x | INC reg |
| 43,x | 1 | 1 | 0 | x | INC reg |
| 44,x | 1 | 1 | 0 | x | INC reg |
| 45,x | 1 | 1 | 0 | x | INC reg |
| 46,x | 1 | 1 | 0 | x | INC reg |
| 47,x | 1 | 1 | 0 | x | INC reg |
| 48,x | 1 | 1 | 0 | x | DEC reg |
| 49,x | 1 | 1 | 0 | x | DEC reg |
| 4A,x | 1 | 1 | 0 | x | DEC reg |
| 4B,x | 1 | 1 | 0 | x | DEC reg |
| 4C,x | 1 | 1 | 0 | x | DEC reg |
| 4D,x | 1 | 1 | 0 | x | DEC reg |
| 4E,x | 1 | 1 | 0 | x | DECreg |
| 4F,x | 1 | 1 | 0 | x | DEC reg |
| 50,x | 1 | 1 | 0 | x | PUSH reg |
| 51,x | 1 | 1 | 0 | x | PUSH reg |
| 52,x | 1 | 1 | 0 | x | PUSH reg |
| 53,x | 1 | 1 | 0 | x | PUSH reg |
| 54,x | 1 | 1 | 0 | x | PUSH reg |
| 55,x | 1 | 1 | 0 | x | PUSH reg |
| 56,x | 1 | 1 | 0 | x | PUSH reg |

(continued)

| Entry # | ILen | Short IV | Modr m | NoLrg Disp | Instruction Mnemonic |
|---|---|---|---|---|---|
| 57,x | 1 | 1 | 0 | x | PUSH reg |
| 58,x | 1 | 1 | 0 | x | POP reg |
| 59,x | 1 | 1 | 0 | x | POP reg |
| 5A,x | 1 | 1 | 0 | x | POP reg |
| 5B,x | 1 | 1 | 0 | x | POP reg |
| 5C,x | 1 | 1 | 0 | x | POP reg |
| 5D,x | 1 | 1 | 0 | x | POP reg |

| Entry # | ILen | Short IV | Modr m | NoLrg Disp | Instruction Mnemonic |
|---|---|---|---|---|---|
| 5E,x | 1 | 1 | 0 | x | POP reg |
| 5F,x | 1 | 1 | 0 | x | POP reg |
| 64,x | 1 | 1 | 0 | x | FS prefix |
| 65,x | 1 | 1 | 0 | x | GS prefix |
| 66,x | 1 | 1 | 0 | x | Operand Size prefix |
| 67,x | 1 | 1 | 0 | x | Address Size prefix |
| 70,x | 2 | 1 | 0 | x | JCC disp8 |
| 71,x | 2 | 1 | 0 | x | JCC disp8 |
| 72,x | 2 | 1 | 0 | x | JCC disp8 |
| 73,x | 2 | 1 | 0 | x | JCC disp8 |
| 74,x | 2 | 1 | 0 | x | JCC disp8 |
| 75,x | 2 | 1 | 0 | x | JCC disp8 |
| 76,x | 2 | 1 | 0 | x | JCC disp8 |
| 77,x | 2 | 1 | 0 | x | JCC disp8 |
| 78,x | 2 | 1 | 0 | x | JCC disp8 |
| 79,x | 2 | 1 | 0 | x | JCC disp8 |
| 7A,x | 2 | 1 | 0 | x | JCC disp8 |
| 7B,x | 2 | 1 | 0 | x | JCC disp8 |
| 7C,x | 2 | 1 | 0 | x | JCC disp8 |
| 7D,x | 2 | 1 | 0 | x | JCC disp8 |
| 7E,x | 2 | 1 | 0 | x | JCC disp8 |
| 7F,x | 2 | 1 | 0 | x | JCC disp8 |
| 80,0 | 3+ | 1 | 1 | 1 | CMP m8,imm8 |
| 80,1 | 3 | 1 | 1 | 0 | "op" r8,imm8 |
| 81,1 | 6 | 1 | 1 | 0 | "op" r32,imm32 |
| 82,0 | 3+ | 1 | 1 | 1 | CMP m8,imm8 |
| 82,1 | 3 | 1 | 1 | 0 | "op" r8,imm8 |
| 83,0 | 3+ | 1 | 1 | 1 | CMP m32,imm8 |
| 83,1 | 3 | 1 | 1 | 0 | "op" r32,imm8 |
| 88,0 | 2+ | 1 | 1 | 0 | MOV m8,reg8 |
| 88,1 | 2 | 1 | 1 | 0 | MOV r8,reg8 |
| 89,0 | 2+ | 1 | 1 | 0 | MOV m32,reg8 |
| 89,1 | 2 | 1 | 1 | 0 | MOV r32,reg8 |
| 8A,0 | 2+ | 1 | 1 | 0 | MOV reg8,m8 |
| 8A,1 | 2 | 1 | 1 | 0 | MOV reg8,r8 |
| 8B,0 | 2+ | 1 | 1 | 0 | MOV reg32,m32 |
| 8B,1 | 2 | 1 | 1 | 0 | MOV reg32,r32 |
| 8D,0 | 2+ | 1 | 1 | 0 | LEA reg32,mem |
| 90,x | 1 | 1 | 0 | x | XCHG AX,AX/NOP |

(continued)

| Entry # | ILen | Short IV | Modr m | NoLrg Disp | Instruction Mnemonic |
|---------|------|----------|--------|------------|----------------------|
| A0,x | 5 | 1 | 0 | x | MOV AL,offs |
| A1,x | 5 | 1 | 0 | x | MOV AX,offs |
| A2,x | 5 | 1 | 0 | x | MOV offs,AL |
| A3,x | 5 | 1 | 0 | x | MOV offs,AX |
| B0,x | 2 | 1 | 0 | x | MOV reg8,imm8 |
| B1,x | 2 | 1 | 0 | x | MOV reg8,imm8 |
| B2,x | 2 | 1 | 0 | x | MOV reg8,imm8 |

| Entry # | ILen | Short IV | Modr m | NoLrg Disp | ! Instruction Mnemonic |
|---------|------|----------|--------|------------|------------------------|
| B3,x | 2 | 1 | 0 | x | MOV reg8,imm8 |
| B4,x | 2 | 1 | 0 | x | MOV reg8,imm8 |
| B5,x | 2 | 1 | 0 | x | MOV reg8,imm8 |
| B6,x | 2 | 1 | 0 | x | MOV reg8,imm8 |
| B7,x | 2 | 1 | 0 | x | MOV reg8,imm8 |
| B8,x | 5 | 1 | 0 | x | MOV reg32,imm32 |
| B9,x | 5 | 1 | 0 | x | MOV reg32,imm32 |
| BA,x | 5 | 1 | 0 | x | MOV reg32,imm32 |
| BB,x | 5 | 1 | 0 | x | MOV reg32,imm32 |
| BC,x | 5 | 1 | 0 | x | MOV reg32,imm32 |
| BD,x | 5 | 1 | 0 | x | MOV reg32,imm32 |
| BE,x | 5 | 1 | 0 | x | MOV reg32,imm32 |
| BF,x | 5 | 1 | 0 | x | MOV reg32,imm32 |
| C0,1 | 3 | 1 | 1 | 0 | Shift r8,imm8 |
| C1,1 | 3 | 1 | 1 | 0 | Shift r32,imm8 |
| C6,0 | 3+ | 1 | 1 | 1 | MOV m8,imm8 |
| C7,0 | 6+ | 1 | 1 | 1 | MOV m32,imm32 |
| D0,1 | 2 | 1 | 1 | 0 | Shift r8,1 |
| D1,1 | 2 | 1 | 1 | 0 | Shift r32,1 |
| D2,1 | 2 | 1 | 1 | 0 | Shift r8,CL |
| D3,1 | 2 | 1 | 1 | 0 | Shift r32,CL |
| E2,x | 2 | 1 | 0 | x | LOOP |
| E8,x | 5 | 1 | 0 | x | CALL disp32 |
| E9,x | 5 | 1 | 0 | x | JMP disp32 |
| EB,x | 2 | 1 | 0 | x | JMP disp8 |
| F0,x | 1 | 1 | 0 | x | LOCK prefix |
| F2,x | 1 | 1 | 0 | x | REPNE prefix |
| F3,x | 1 | 1 | 0 | x | REP/REPE prefix |
| F6,1 | 2 | 1 | 1 | 0 | NOT r8 |
| F7,1 | 2 | 1 | 1 | 0 | NOT r32 |
| default | x | 0 | x | x | all other table entries |
| Entry # | ILen | Short IV | Modrm | NoLrg Disp | Instruction Mnemonic |

Logic for calculating the effective ShortI value is described by the following pseudo-RTL, as follows:

$$LrgDisp = \text{"disp32"} + \text{"da32"}$$
$$= (Opc1[7..6] = \text{'b10}) +$$
$$(Opc1[7..6,2..0] = \text{'b00101}) +$$
$$((Opc1[7..6,2..0] = \text{'b00100}) (Opc2[2..0] = \text{'b101}))$$
$$DA16 = (Opc1[7..6,2..0] = \text{'b00110})$$

Logic for ensuring that only NOT r/m is recognized as a short decode for this opcode byte value is described as follows:

$$SubOpc2 = (Opc1[5..3] = \text{'b010})$$
$$OnlySubOpc2 = (Opc0[7..0] = \text{'b1111011x})$$

Logic for ensuring that only CMP m,imm is recognized as a short decode for this opcode byte value and not for other "op"s is described as follows:

$$SubOpc7 = (Opc1[5..3] = \text{'b111})$$
$$OnlySubOpc7 = (Opc0[7..0] = \text{'b10000xxx}) \sim RegModrm$$

Logic for ensuring that only non-rotate shift instructions are recognized as short decodes is described as follows:

$$RotShift = (Opc0[7..0] = \text{'b110x00xx}) (Opc1[5] = \text{'b0})$$

Logic for determining the ShortI value for the first fourteen bytes is described as follows:

$$ShortI = ShortIV \,\&$$
$$\sim(Modrm (NoLrgDisp (LrgDisp + DA16) + OnlySubOpc7 \sim SubOpc7 +$$
$$RotShift))$$

Logic for determining the ShortI value for the fifteen byte is described as follows:

$$ShortI = ShortIV \,\&$$
$$\sim(Modrm (NoLrgDisp (LrgDisp + DA16) + OnlySubOpc7 \sim SubOpc7 +$$
$$RotShift + (Opc1[7..6,2..0] = \text{'b00100})) )$$

Logic for determining the ShortI value for the sixteen byte is described as follows:

$$ShortI = ShortIV \,\& \sim Modrm$$

Logic for determining the ILen value is described as follows:

$$\text{Sib} = (\text{Opc1}[7..6,2..0] = (\sim\text{'b11xxx 'bxx100}) )$$
$$\text{Disp8} = (\text{Opc1}[7..6] = \text{'b01})$$
$$\text{ALen}[2..0] = 3\text{'b0} ;$$
$$\text{if (Sib)} \quad \text{ALen}[] = \text{ALen}[] + 1 ;$$
$$\text{if (Disp8)} \quad \text{ALen}[] = \text{ALen}[] + 1 ;$$
$$\text{if (LrgDisp) ALen}[] = \text{ALen}[] + 4$$
$$\text{SILen}[2..0] = (\text{Modrm}) ? (\text{ILen}[2..0] + \text{ALen}[2..0]) \bmod 8$$
$$: \text{ILen}[2..0]$$

For the instruction MOV m32,imm32 with (Disp8 Sib), then final length ALen=8 which ultimately results causes this instruction byte to be treated as a non-short decode opcode despite determining a Short1 value of 1.

During each decode cycle, the macroinstruction decoder 230 checks for several exception conditions, including an instruction breakpoint, a pending nonmaskable interrupt (NMI), a pending interrupt (INTR), a code segment overrun, an instruction fetch page fault, an instruction length greater than sixteen bytes, a nonlockable instruction with a LOCK prefix, a floating point not available condition, and a pending floating point error condition. Some conditions are evaluated only during an otherwise successful decode cycle, other conditions are evaluated irrespective of any decoding actions during the cycle. When an active exception condition is detected, all instruction decode cycles including short, long and vectoring decode cycles, are inhibited and an "exception" vectoring decode is forced in the decode cycle following exception detection. The recognition of an exception condition is only overridden or inhibited by inactivity of the macroinstruction decoder 230, for example, when emulation code Op quads are accepted by the scheduler 260, rather than short and long or vector decoder Op quads. In effect, recognition and handling of any exception conditions are delayed until an ERET Op seq returns control to the macroinstruction decoder 230.

During the decode cycle that forces exception vectoring, a special emulation code vector address is generated in place of a normal instruction vector address. The vectoring Op quad that is generated by the long and vectoring decoders 416 and 418 is undefined. The exception vector address is a fixed value except for low-order bits for identifying the particular exception condition that is recognized and handled. When multiple exception conditions are detected simultaneously, the exceptions are ordered in a priority order and the highest priority exception is recognized.

The instruction breakpoint exception, the highest priority exception condition, is recognized when the linear decode PC 424 points to the first byte of an instruction including prefixes, the linear decode PC 424 matches a breakpoint address that is enabled as an instruction breakpoint, and none of the instruction breakpoint mask flags are clear. One mask flag (RF) specifically masks recognition of instruction breakpoints. Another mask flag (BNTF) temporarily masks NMI requests and instruction breakpoints.

The pending NMI exception, the penultimate priority exception, is recognized when an NMI request is pending and none of the NMI mask flags are clear. One mask (NF) specifically masks nonmaskable interrupts. Another mask flag (BNTF) temporarily masks NMI requests and instruction breakpoints.

The pending INTR exception, the next exception in priority following the pending NMI exception, is recognized when an INTR request is pending and the interrupt flag (IF) and temporary interrupt flag (ITF) are clear.

The code segment overrun exception, the next exception in priority following the pending INTR exception, is recognized when the macroinstruction decoder 230 attempts to successfully decode a set of instructions beyond a current code segment limit.

The instruction fetch page fault exception, having a priority immediately lower than the code segment overrun exception, is recognized when the macroinstruction decoder 230 requires additional valid instruction bytes from the instruction buffer 408 before decoding of another instruction or prefix byte is possible and the instruction translation lookaside buffer (ITB) signals that a page fault has occurred on the current instruction fetch. A faulting condition of the instruction fetch control circuit 218 is repeatedly retried so that the ITB continually reports a page fault until the page fault is recognized by the macroinstruction decoder 230 and subsequent exception handling processing stops and redirects instruction fetching to a new address. The fault indication from the ITB has the same timing as instructions loaded from the instruction cache 214 and, therefore, is registered in the subsequent decode cycle. The ITB does not necessarily signal a fault on consecutive instruction fetch attempts so that the macroinstruction decoder 230 holds the fault indication until fetching is redirected to a new instruction address. Upon recognition of a page fault, additional fault information is loaded into a special register field.

The instruction length greater than sixteen bytes exception, which has a priority just below the instruction fetch page fault exception, is recognized when the macroinstruction decoder 230 attempts to successfully decode an instruction having a total length including prefix bytes of greater than fifteen bytes. The instruction length greater than sixteen bytes exception is detected by counting the number of prefix bytes before an actual instruction is decoded and computing the length of the rest of the instruction when it is decoded. If the sum of the prefix bytes and the remaining instruction length is greater than sixteen bytes, an error is recognized.

The nonlockable instruction with a LOCK prefix exception, having a priority below the instruction length exception, is recognized when the macroinstruction decoder **230** attempts to successfully decode an instruction having a LOCK prefix, in which the instruction is not included in the lockable instruction subset. The nonlockable LOCK instruction exception is detected based on decode of the opcode byte and existence of a OF prefix. The nonlockable LOCK instruction exception only occurs during vectoring decode cycles since the LOCK prefix inhibits short and long decodes.

The floating point not available exception, having a next to lowest priority, is recognized when the macroinstruction decoder **230** attempts to successfully decode a WAIT instruction or an ESC instruction that is not a processor control ESC, and the reporting of a floating point error is pending. Macroinstruction decoder **230** detects the floating point not available exception based on decoding of an opcode and modr/m byte, in addition to the existence of a 0F prefix.

During each decode cycle, the macroinstruction decoder **230** attempts to perform some form of instruction decode of one or more instructions. Typically, the macroinstruction decoder **230** succeeds in performing either one or multiple short decodes, one long decode or an instruction vectoring decode. Occasionally no decode is successful for three types of conditions including detection of an active exception condition, lack of a sufficient number of valid bytes in the instruction buffer **408**, or the macroinstruction decoder **230** does not advance due to an external reason.

When an active exception condition is detected all forms of instruction decode are inhibited and, during the second decode cycle after detection of the exception condition, an exception vectoring decode cycle is forced, producing an invalid Op quad.

When an insufficient number of valid bytes are available in the instruction buffer **408** either no valid bytes are held in the instruction buffer **408** or at least the first opcode is valid and one of the decoders decodes the instruction but the decoded instruction length requires further valid bytes in the instruction buffer **408**, not all of which are currently available.

When an external reason prevents macroinstruction decoder **230** advancement either the scheduler **260** is full and unable to accept an additional Op quad during a decode cycle or the scheduler **260** is currently accepting emulation code Op quads so that the macroinstruction decoder **230** is inactive awaiting a return to decoding.

In the latter two cases, the decode state of the macroinstruction decoder **230** is inhibited from advancing and the macroinstruction decoder **230** simply retries the same decodes in the next decode cycle. Control of macroinstruction decoder **230** inhibition is based on the generation of a set of decode valid signals with a signal corresponding to each of the decoders. For each decoder there are multiple reasons which are combined into decoder valid signals to determine whether that decoder is able to successfully perform a decode. The decoder valid signals for all of the decoders are then monitored, in combination, to determine the type of decode cycle to perform. The type of decode cycle is indicative of the particular decoder to perform the decode. The external considerations are also appraised to determine whether the selected decode cycle type is to succeed. Signals indicative of the selected type of decode cycle select between various signals internal to the macroinstruction decoder **230** generated by the different decoders, such as alternative next decode PC values, and also are applied to control an Op quad multiplexer **444** which selects the input Op quad applied to the scheduler **260** from the Op quads generated by the short decoders, the long decoder **416** and the vectoring decoder **418**.

In the case of vectoring decode cycles, the macroinstruction decoder **230** also generates signals that initiate vectoring to an entry point in either internal emulation code ROM **232** or external emulation code RAM **236**. The macroinstruction decoder **230** then monitors the active duration of emulation code fetching and loading into the scheduler **260**.

The branch target buffer (BTB) **456** is a circuit employed for usage in a two-level branch prediction algorithm that is disclosed in detail in U.S. Patent No. 5,454,117, entitled CONFIGURABLE BRANCH PREDICTION FOR A PROCESSOR PERFORMING SPECULATIVE EXECUTION (Puziol et al., issued September 26, 1995), U.S. Patent No. 5,327,547, entitled TWO-LEVEL BRANCH PREDICTION CACHE (Stiles et al., issued July 5, 1994), U.S. Patent No. 5,163,140, entitled TWO-LEVEL BRANCH PREDICTION CACHE (Stiles et al., issued November 10, 1992), and U.S. Patent No. 5, 093,778, entitled INTEGRATED SINGLE STRUCTURE BRANCH PREDICTION CACHE (Favor et al., issued March 3, 1993). The BTB **456** stores quadword data from the first successful fetch of the instruction cache **214** following an event such as a cache miss. The BTB **456** is used to avoid a one cycle delay that would normally occur between the decode of a transfer instruction and a decode of the target instructions. The BTB **456** includes sixteen entries, each entry having sixteen instruction bytes with associated predecode bits. The BTB **456** is indexed by the branch address and is accessed during the decode cycle. Instructions from the BTB **456** are sent to the instruction decoder **220**, eliminating the taken-branch penalty, for a cache hit of the BTB **456** when a branch history table (not shown) predicts a taken branch.

During each decode cycle, the linear decode PC **424** is used in a direct-mapped manner to address the BTB **456**. If a hit, which is realized before the end of the decode cycle, occurs with a BTB entry, a PC-relative conditional transfer control instruction is decoded by a short decoder and the control transfer is predicted taken, then two actions occur. First, the initial target linear fetch address directed to the instruction cache **214** is changed from the actual target address to a value which points to an instruction byte immediately following the valid target bytes contained in the BTB entry. This modified fetch address is contained in the BTB entry and directly accessed from the BTB entry. Second, the instruction byte and predecode information from the entry is loaded into the instruction buffer **408** at the end of the decode cycle. If a PC-relative conditional transfer control instruction is decoded by a short decoder and the control transfer is predicted taken, but a miss occurs, then a new BTB entry is created with the results of the target instruction fetch. Specifically, simultaneously with the first successful load of target instruction bytes into the instruction buffer **408** from the instruction cache **214**, the same information is loaded into a chosen BTB entry, replacing the previous contents. The target fetch and instruction buffer **408** load otherwise proceed normally.

Each entry includes a tag part and a data part. The data part holds sixteen extended instruction bytes including a memory byte and three associated predecode bits. The correspondence of the memory byte is memory-aligned with the corresponding instruction buffer **408** location. The tag part of a BTB entry holds a 30-bit tag including the 32-bit linear decode PC **424** associated with the transfer control instruction having a cached target, less bits [4:1], an entry valid bit and the 30-bit modified initial target linear instruction fetch address. No explicit instruction word valid bits are used since the distance between the true target address and the modified target address directly implies the number and designation of valid instruction words within the BTB **456**.

The purpose of the BTB **456** is to capture branch targets within small to medium sized loops for the time period a loop and nested loops are actively executed. In accordance with this purpose, at detection of a slightest possibility of an inconsistency, the entire BTB is invalidated and flushed. The BTB **456** is invalidated and flushed upon a miss of the instruction cache **214**, any form of invalidation of instruction cache **214**, an ITB miss, or any form of ITB invalidation. Branch targets outside temporal or spatial locality are not effectively cached. Typically, the BTB **456** contains only a small number of entries so that complexity is reduced while the majority of performance benefit of ideal branch target caching is achieved.

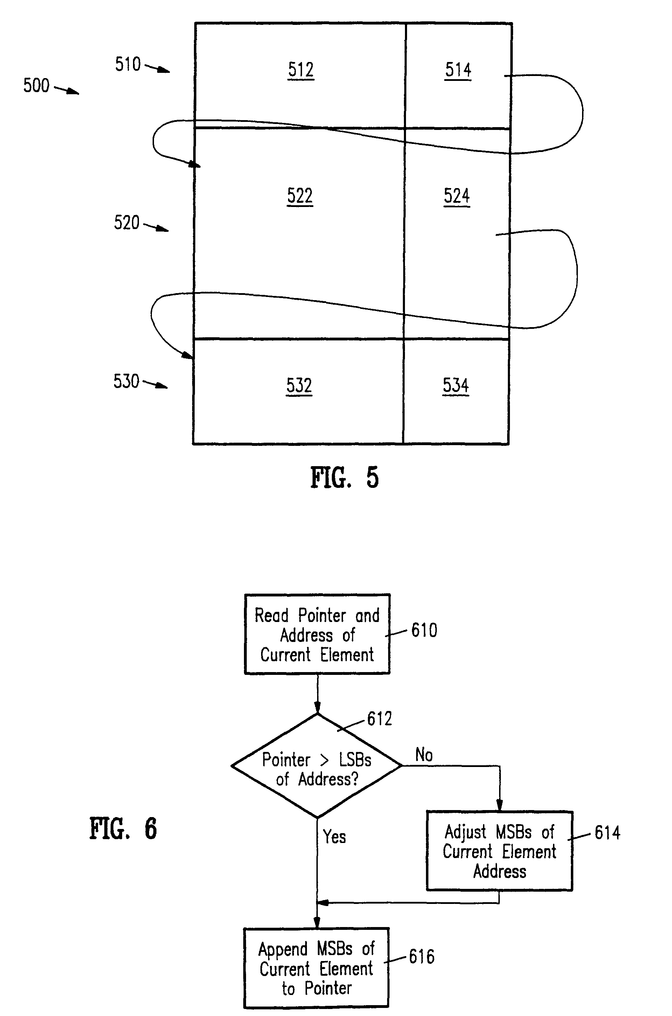

The instruction cache **214** stores information in the form of a list of a plurality of instruction bytes in a predetermined order. This predetermined order is specified by associating a pointer with each element in the list that points to the starting point of the next element in the list. The pointers for the instruction cache **214** list are the predecode bits. One aspect of predecoder **270** operations is the generation of these pointers and storage of the pointers as predecode bits in the instruction cache **214**. Referring to **Figure 5**, a list **500** is shown having three instructions **510**, **520** and **530** in a sequence. Each instruction **510**, **520** and **530** includes respective instruction byte data **512**, **522** and **532** and respective pointers **514**, **524** and **534** where the first two pointers **514** and **524** point to the respective instructions **520** and **530** in the list **500**. Typically, the instruction byte data and pointers are stored in a binary format with the number of instruction bytes in an instruction byte data group being variable. In this example, the first instruction byte data group **512** includes four instruction bytes, the second instruction byte data group **522** includes six instruction bytes and the third instruction byte data group **532** includes three instruction bytes. The first byte of each instruction is an opcode byte and the address of the opcode byte is the address of the instruction.

For lists in which the opcode byte of successive instructions are separated by a known maximum number of bytes, the pointers are defined as an offset between the current address and the next address so that the bit width of the pointers is limited to correspond to the maximum number of bytes. Accordingly, for a maximum number $2^m$ of bytes that separate any two instructions, the pointer is m bits wide. The size of memory storage is advantageously reduced. When the address of the next instruction is sought, the pointer value is easily expanded into a full storage address for usage by an addressable storage device. In some embodiments of the predecoder **270**, various predefined pointer values represent special events, such as the end of the list or instructions that exceed a specified instruction byte length. Consequently, the maximum number of storage locations from one instruction to the next is reduced to $2^m$ less the number of special event instances. The list **500** includes pointers **514**, **524** and **534** that are stored as 3-bit values and the pointer **534** of the last instruction **530** is set to a code that indicates the end of the list **500**.

A pointer that points to a next instruction is equal to the m least significant bits of the address of the next instruction. Thus, pointers **514** and **524** are equal to the m least significant bits of the addresses of instructions **520** and **530**, respectively. Pointer **534** of the third instruction **530** is set to a code, for example zero, that indicates the end of the list.

Referring to **Figure 6**, a flow chart shows a method for generating a next instruction address from a pointer. In a first step **610**, the associated pointer and starting address of an instruction are read. The value of the pointer is compared to the value of the m least significant bits of the instruction starting address in logical step **612**. If the value of the pointer is greater than the value of the m least significant bits of the instruction starting address, the next instruction is located within the same page as the current instruction. For an instruction buffer memory **408** having $2^n$ memory locations, the remaining n-m most significant bits of the current instruction is located. In step **616**, the storage location of the next instruction is determined by appending the n-m most significant bits of the current instruction starting address to the pointer, the pointer bits being used as the m least significant bits. If the pointer value is less than the value of the m least significant bits of the address of the current instruction, the next instruction is located on the page following the current instruction. The n-m most significant bits of the storage address of the current instruction is adjusted, for example by incrementing the bits, in step **614** prior to being appended to the pointer in step **616**.

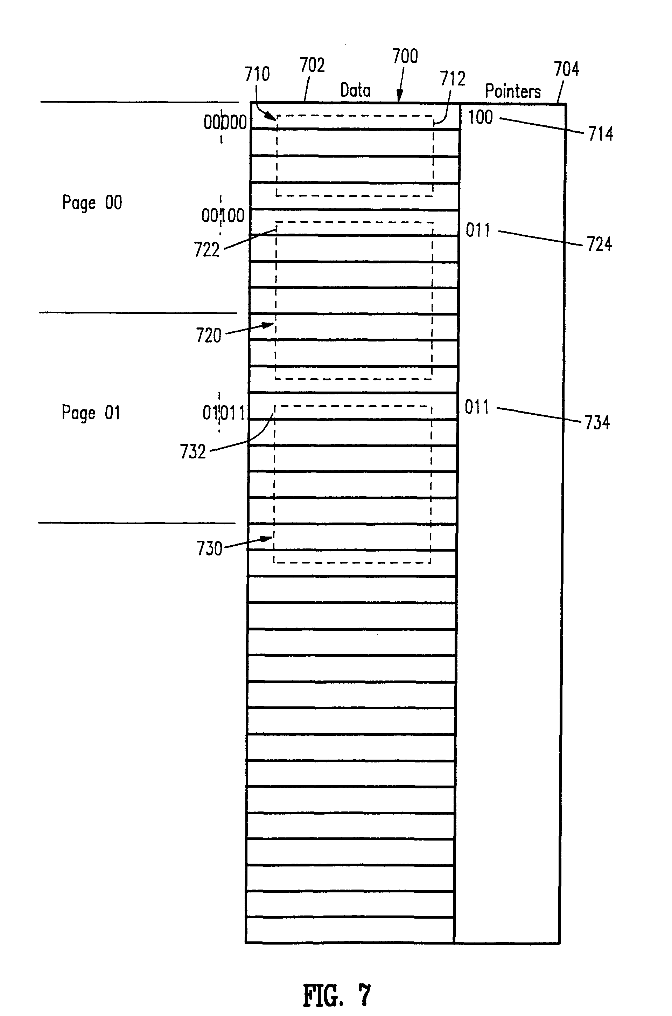

Referring to **Figure 7**, a memory **700** is shown to illustrate operation of the predecoder **270** for handling the instruction cache **214** as a list. In this example, the memory **700** has a storage capacity of 32 instruction bytes **702** which is extended by three bits of pointer information **704** per instruction byte. In various embodiments, the pointer bits may be stored with the instruction bytes or contained in a separate memory. Also in this example, three instructions **710**, **720** and **730** having instruction sizes ranging from one to seven instruction bytes are stored in memory **700**. The first byte of each of the instructions **710**, **720** and **730** is an opcode instruction byte **712**, **722** and **732**, respectively. The opcode instruction byte **712** is stored in memory location 0000 and the opcode instruction byte **722** is stored in memory location 00100 so that a pointer **714** from the first instruction **710** to the second instruction **720** is 100, which is equal to the three least significant bits of the address of the second instruction **720**. The opcode instruction byte **732** is stored in memory location 01011 so that a pointer **724** associated with the second instruction **720** is 011.

To traverse the memory **700**, the pointer **714** (100) associated with the first instruction **710** in memory location 00000 is read and compared to the three least significant bits of the first instruction **720** address (000). The pointer **714** (100) is greater than the first instruction **720** address (000) so that the instruction address of the second instruction **720** is determined by appending the pointer **714** (100), which represents the least significant bits of the address of the second instruction **720**, to the two most significant bits (00) of the address of the first instruction **710** to produce the address of the second instruction **720** at memory location 00100. The location of the third instruction **730** is identified by reading the pointer **724** and comparing the pointer value to the three least significant bits (100) of the address of the opcode instruction byte **722**. The pointer **724** (011) is smaller than the three least significant bits of the address of the opcode instruction byte **722** (100) so that the third instruction **730** is located on the subsequent page (01) after page (00) of the second instruction **720**. The remaining most significant bits (00) of the address of the second instruction **720** are incremented by one and appended to the pointer **724** to generate the address of the third instruction **730** (01011). The third instruction **730** is the last instruction in the list so that the three least significant bits of the third instruction address are stored in the third pointer **734** (011), indicating the end of the list.

One special event that is represented by a pointer is the end of a list. The pointer indicates the end of a list when the pointer is equal to the least significant bits of the current instruction. Another special event is a number of instruction bytes within an instruction that exceeds the maximum allowed instruction length. The pointer also indicates an illegal instruction length when the pointer is equal to the least significant bits of the current instruction.

In this manner, only an occasional increment of a few bits furnishes memory space conservation of a typical offset list method without performing a time-consuming addition operation. This technique advantageously allows for fast traversal of a list while reducing the space consumed to store each pointer.

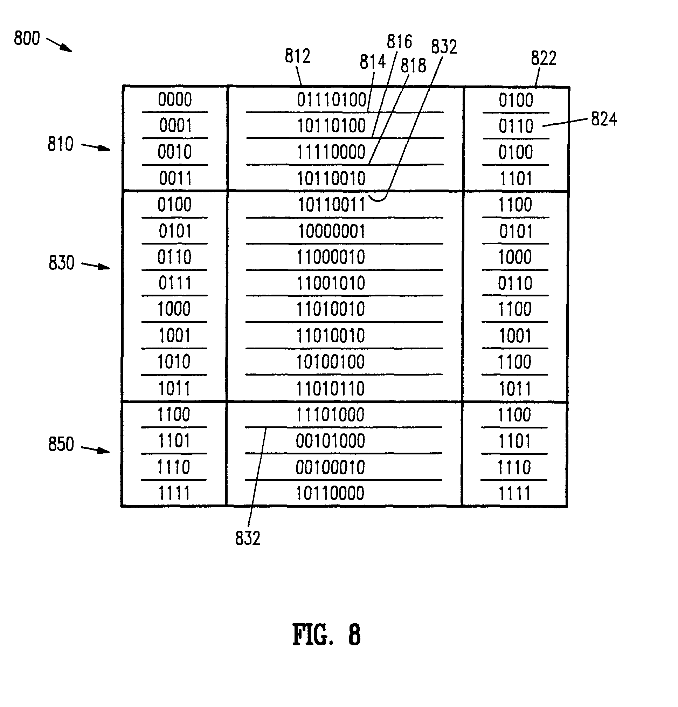

Instruction codes are composed of bytes of binary ones and zeros. Nearly every combination of bits are used as opcodes, the first instruction bytes, so that nearly any opcode value could appear to be the first instruction byte. This concept is illustrated by the pictorial memory **800** representation shown in **Figure 8**, which shows three instructions **810**, **830** and **850**. The first instruction **810** is a four-byte instruction including instruction bytes **812**, **814**, **816** and **818**. In the four-byte instruction **810**, any of the instruction bytes **812**, **814**, **816** and **818** could be the actual first instruction byte. To decode the instruction **810**, a rotator first ascertains which instruction byte is the first. To ascertain which byte of instruction **810** is first, each of instruction bytes **812**, **814**, **816** and **818** is assumed to be the starting byte of the instruction. For every instruction byte **812**, **814**, **816** and **818**, the byte plus, for some instructions, subsequent instruction bytes identify bytes that could possibly be an instruction. Once an instruction byte is identified as an actual opcode that is the beginning byte of an instruction, subsequent instruction locations are readily identified from the information associated with the first actual byte **812** and information with the first bytes of subsequent instructions **832** and **852** since the predecode bits indicate the number of instruction bytes in each instruction.

For example, if instructions starting with byte **812** (01110100) were four bytes long and instructions starting with byte **814** (10110100) were five bytes long, byte **812** could represent the start of an instruction with a four-byte length and byte **814** could represent the start of an instruction with a five-byte length. While only one of these bytes could represent the start of an instruction, prior to the actual knowledge of which byte is the starting byte, both bytes could be assumed to be starting bytes for the purpose of associating the location of the start of the next instruction with each byte **812** and **814**. Thus, pointer information **822** and **824** furnish the location of the next instruction byte if either respective byte **812** and **814** is the first byte of an instruction. When byte **812** is identified as the actual starting byte of the instruction **810**, the location of the following instruction **830** is immediately available using the pointer **822**. Pointer **824** is ignored because byte **814** is not the first byte of an instruction. The pointers associated with bytes that are not actual first bytes are always ignored, resulting in wasted analysis, However, this wasted analysis is greatly overshadowed by the benefit of rapid knowledge of the start of all actual instructions and simultaneous decoding of multiple instructions.

Certain instructions, such as complex instructions or instructions that execute over many cycles, are not executed simultaneously with other instructions even if decoded simultaneously. The analysis to determine the first byte of an instruction is simplified if no attempt is made to decode these complex instructions in parallel. Accordingly, some instructions that generally execute rapidly are classified as "short decodable" instructions. For short decodable instructions, performance is improved by decoding a plurality of instructions in parallel. Other instructions that are not short decodable take longer to execute so that no benefit is obtained by rapid decoding. Accordingly, the location of a subsequent instruction is only determined in advance if the instruction is short decodable.

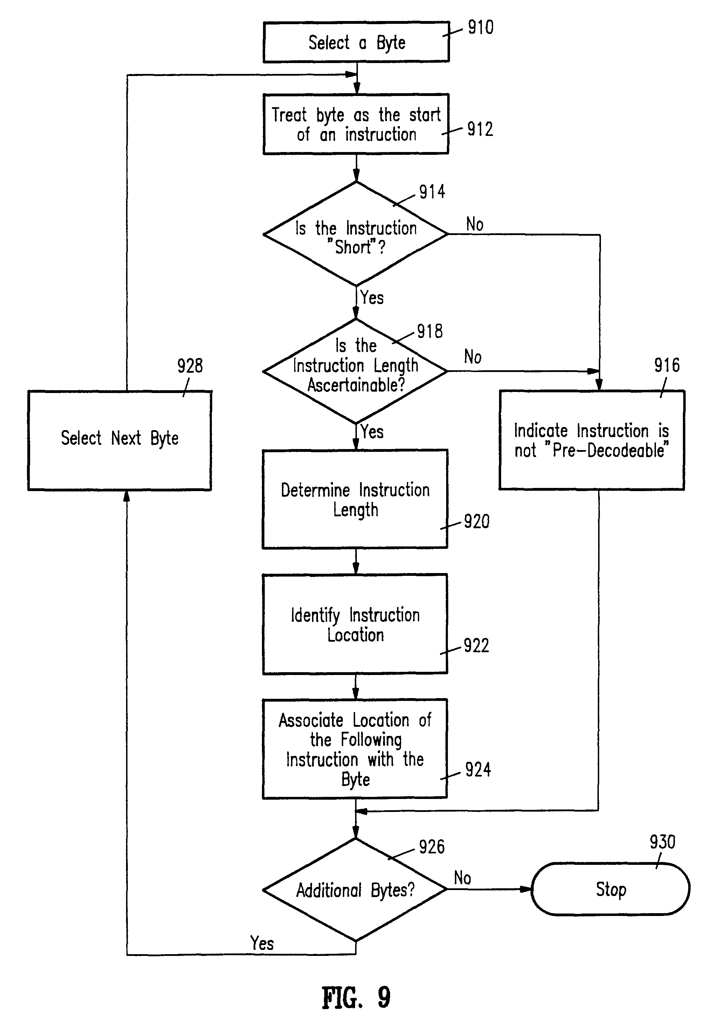

Referring to the flow chart shown in **Figure 9**, a predecoding method **900** of preparing computer instructions for rapid decoding is shown. In step **910**, an instruction byte is selected and assumed to be the starting byte of an instruction in step **912**. The instruction byte is read and a determination is made whether the instruction byte belongs to the set of short decodable instructions in step **914**. For some instruction bytes, subsequent adjacent instruction bytes are also read to determine short decodable status. If the instruction byte is not within the set of short decodable instructions, the instruction is indicated to be of a "non-short-decodable" class in step **916**. Although this indication may be made in various ways in different embodiments, in one embodiment an instruction is identified to be non-short-decodable by specifying an instruction length of zero. Typically no valid instructions have an instruction length of zero. If the instruction is a short decodable instruction, step **918** determines whether the instruction length of the instruction is ascertainable. Step **918** typically prohibits predecoding of instructions that do not contain all information to allow a determination of instruction length. If the instruction length is not ascertainable, the instruction is indicated to be of a "non-short-decodable" class in step **916**. Otherwise, the instruction length is ascertainable and determined in step **920** in accordance with the instruction set definition of the processor. The location of the next instruction is then determined in step **922** using the memory location of the first instruction and the instruction length furnished by the pointer. The location of the following instruction, referenced to the first byte, is stored in step **924**. These steps are typically repeated in accordance with looping step **926**, which determines whether additional bytes are in the memory, and the select next byte step **928**. When the final instruction byte in the memory is analyzed, the method terminates in step **930**.

To determine the length of an instruction in step **922**, information that is not in the opcode instruction byte but which is instead contained in subsequent bytes is used for some instructions. In some instruction sets, including the x86 instruction set, certain instructions cause the interpretation of following instructions to change. For example, in the x86 instruction set, instruction lengths sometimes vary depending upon the D-bit. For some instructions, the predecode instruction length is not affected by the data and address size. For other instructions, the D-bit sets a 2X instruction length. For still other instructions, the D-bit designates a special instruction length that is not 2X. Thus a D-bit interpretation change can result in a change in instruction length. Tracking the interpretation of an instruction prior to actual execution of the instruction is often difficult or impossible. In some cases, some interpretations of the instruction are short decodable interpretations and other interpretations are non-short decodable. In these cases, the instruction is assumed to be short decodable. The method, of course, performs correctly when the assumption is correct and the location of the following instruction is correct. If the assumption is incorrect, the location of the following instruction is incorrect, but irrelevant, because the location information is only used for short decodable instructions. At execution time, the selection of a different processor operating mode causes no search for short decodable instructions to be performed so that the incorrect assumption does not affect performance.

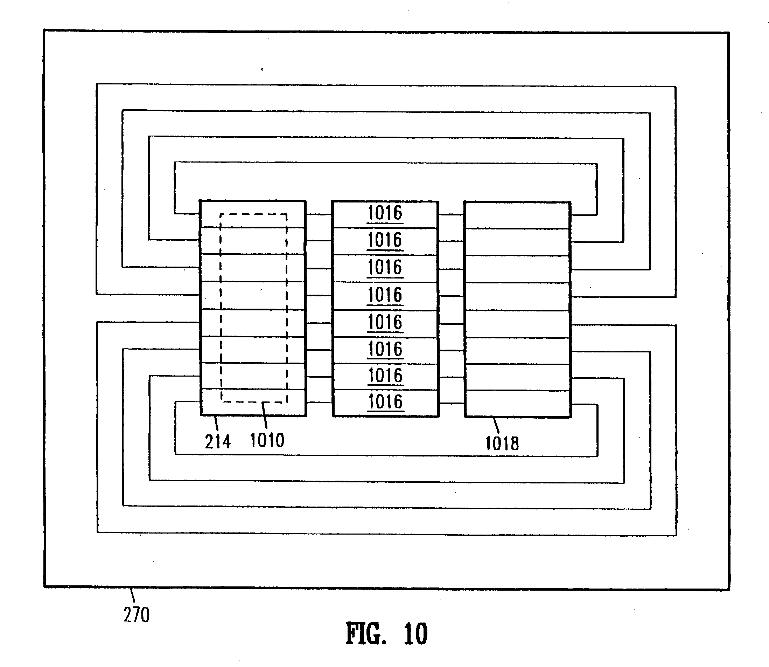

**Figure 10** is a schematic diagram showing the operation of one embodiment of predecode logic **270** for transferring instructions from the instruction cache **214** to the macroinstruction decoder **230**. The cache memory **214** holds a group of instruction bytes **1010**. One instruction length computation module **1016** per cache memory location is connected to the cache memory **214** to read instruction bytes contained in the cache memory **214**. In other embodiments, fewer instruction length computation modules **1016** are used. However, one module **1016** per instruction byte furnishes the fastest computation. The output signal of the instruction length computation module **1016** indicates a binary length of an instruction. If the instruction is not predecodable, either because the instruction is not short decodable or inadequate information is contained in the cache memory **214** to determine an instruction length, the instruction length computation module **1016** indicates this status, for example, by setting the instruction length to zero.

A next instruction computation module **1018** adds the output signal of the instruction length computation module **1016** to a location code of the corresponding byte in the cache memory **214** to produce the location code of the instruction following the instruction containing the corresponding byte. This location code is stored in the cache memory **214** to be read when the macroinstruction decoder **230** decodes the instruction bytes **1010** stored in the cache memory **214**. This predecode information is determined and stored soon after the instruction byte is placed in the cache memory **214**. This computation is performed regardless of whether the instruction byte is a first instruction byte, or opcode. Only the predecode information for an actual first instruction is ultimately used for decoding instructions. However, the operation of computing predecode information for all instruction bytes furnishes the location of a true next instruction most rapidly.

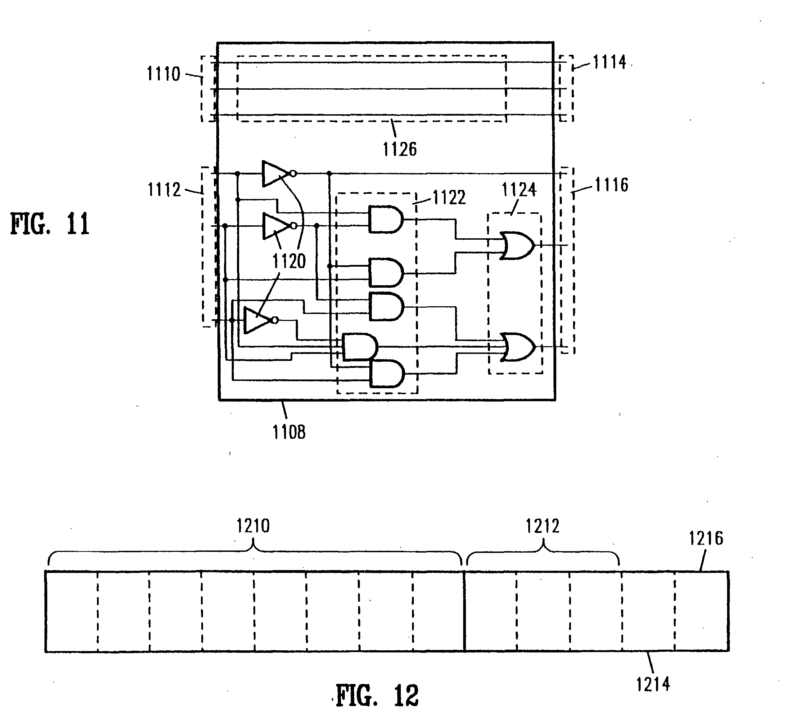

Referring to **Figure 11,** a schematic circuit diagram shows an embodiment of a next instruction computation module **1108** for connecting output signals of two instruction length computation modules **1016** that are connected to cache memory locations 0000 and 0001. For each input signal **1110** and **1112**, the next instruction computation module **1108** adds the input signals **1110** and **1112** to the memory location code corresponding to the input signals. The input signal **1110** connects to an instruction length computation module **1016** that computes the instruction length for the byte or bytes starting at cache memory location 0000. The next instruction computation module **1108** adds this input signal to binary 0000 to produce an output signal **1114**. For cache memory location 0000, this sum is equal to the input signal. The next instruction location computation module **998** transfers the input signal **1110** to the output signal **1114** via a bus **1126**.

Input signal **1112** are connected to receive the output signal of the instruction length computation module **996** for the byte or bytes beginning at cache memory location 0001. Output signals **1116** are equal to a binary representation of the input signals **1112** added to 0001. Inverters **1120**, AND gates **1122** and OR gates **1124** furnish this next instruction computation function. Output signals **1114** and **1116** are typically connected to the corresponding cache memory locations which hold the location of the next instruction for future potential decoding.

Referring to **Figure 12**, a schematic pictorial illustration of an arrangement of bits in the cache memory **214** is shown. Instruction bits **1210** are stored adjacent to a predecode code **1212** which indicates the next location. Eight instruction bits **1210** and five predecode bits **1212** including three next instruction location code bits **1212**, a D-bit **1214** and a HASMODRM bit **1215** are illustrated. In other embodiments, different numbers of bits are used to encode instruction data and predecode information.


## SYSTEM DISCLOSURE TEXT

A wide variety of computer system configurations are envisioned, each embodying an instruction predecode and multiple instruction decode in accordance with the present invention. For example, such a computer system (e. g., computer system **1000**) includes a processor **120** providing instruction predecode and multiple instruction decode in accordance with the present invention, a memory subsystem (e.g., RAM **1020**), a display adapter **1010,** disk controller/adapter **1030**, various input/output interfaces and adapters (e.g., parallel interface **1009**, serial interface **1008**, LAN adapter **1007**, etc.), and corresponding external devices (e.g., display device **1001**, printer **1002**, modem **1003**, keyboard **1006**, and data storage). Data storage includes such devices as hard disk **1032**, floppy disk **1031**, a tape unit, a CD-ROM, a jukebox, a redundant array of inexpensive disks (RAID), a flash memory, etc.

While the invention has been described with reference to various embodiments, it will be understood that these embodiments are illustrative and that the scope of the invention is not limited to them. Many variations, modifications, additions, and improvements of the embodiments described are possible. Additionally, structures and functionality presented as hardware in the exemplary embodiment may be implemented as software, firmware, or microcode in alternative embodiments. For example, the description depicts a macroinstruction decoder having short decode pathways including three rotators **430**, **432** and **434**, three instruction registers **450**, **452** and **454** and three short decoders SDec0 **410**, SDec1 **412** and SDec2 **414**. In other embodiments, different numbers of short decoder pathways are employed. A decoder that employs two decoding pathways is highly suitable. These and other variations, modifications, additions, and improvements may fall within the scope of the invention as defined in the claims which follow.


**Claims**

**1.** An apparatus for accessing a plurality of variable-length instructions from an instruction source and preparing the instructions for execution, the variable length instructions including one or more instruction units, an instruction unit being a multiple-bit instruction portion, the apparatus comprising:

an instruction cache (214) coupled to the instruction source and having a plurality of instruction storage elements for storing instruction units and having a plurality of code storage elements for storing code units, a code unit being a multiple-bit code portion, the instruction storage elements being associated with corresponding code storage elements and storing instruction units being associated with corresponding code units;

a predecoder (270) coupled to the instruction cache for reading instruction units, the predecoder assigning a code indicative of instruction length based on the read instruction units assuming each instruction unit is a first instruction unit of a variable-length instruction;

a decoder (220) coupled to the instruction cache to receive a plurality of instruction units and a plurality of corresponding code units, the decoder including a plurality of first instruction type decoders (230) and a second instruction type decoder (231), the decoder for decoding a plurality of first instruction type instructions in parallel using the plurality of first instruction type decoders when a first instruction type instruction unit and a corresponding code unit is received from the instruction cache and otherwise for decoding an instruction using the second instruction type decoder.

**2.** An apparatus according to claim 1 wherein:

the instruction unit is an eight-bit byte; and
the code unit is a plurality of bits designating a next instruction pointer and an instruction type.

**3.** An apparatus according to claim 1 wherein the decoder decodes a plurality of first instruction type instructions in parallel using the plurality of first instruction type decoders when a plurality of consecutive first instruction type instruction units and corresponding plurality of code units are received from the instruction cache.

**4.** An apparatus according to claim 1 further comprising:

a plurality of rotators (430,432,434) coupled between respective first instruction type decoders and the instruction cache, the plurality of rotators for aligning the first instruction type instructions for decoding.

**5.** An apparatus according to claim 1 further comprising:

a plurality of instruction registers coupled between respective first instruction type decoders and the instruction cache, the plurality of instruction registers for temporarily holding the first instruction type instruction units and corresponding plurality of code units so that a decode timing cycle is reduced.

**6.** An apparatus according to claim 1 wherein the predecoder includes a circuit for generating an address of a next instruction in a list of a plurality of instructions, the instruction cache for storing the list of instructions at addressed locations, the circuit including:

a signal generator having a plurality of output terminals coupled to the instruction cache and having an input terminal coupled to receive a current address pointer wherein, in response to receipt of the current instruction pointer, the signal generator activates one of the plurality of output terminals coupled to the next instruction at an addressed location.

**7.** An apparatus according to claim 1 wherein the predecoder includes a circuit for generating a next address of a next instruction after a current instruction in an increasing sequential list of a plurality of instructions in the instruction cache, the instruction cache being addressable and storing the list of instructions, the current instruction including a current instruction pointer and a current instruction address having a first portion that is a number of most significant bits of the current instruction address and having a second portion that is a number of least significant bits of the current instruction address, the circuit for generating a next address including:

a next instruction address computation unit (1018,1108) coupled to the instruction cache and receiving from the instruction cache the current instruction pointer and the current instruction address, wherein;
in response to a value of the current instruction address pointer being greater than a value of the second portion of the current instruction address, the next instruction address computation unit generates the next instruction address having a first portion equal to the first portion of the current instruction address and having a second portion equal to the current instruction address pointer; and
responsive to the value of the current instruction address pointer being less than the value of the second portion of the current instruction address, the next instruction address computation unit generates the next instruction address having a first portion of the current instruction address and having a second portion equal to the current instruction pointer.

**8.** An apparatus according to claim 1 wherein the predecoder includes a circuit for generating a next address of a next instruction after a current instruction in a decreasing sequential list of a plurality of instructions in the instruction cache, the instruction cache being addressable for storing the list of instructions, the current instruction including a current instruction pointer and a current instruction address having a first portion that is a number of most significant bits of the current instruction address and having a second portion that is a number of least significant bits of the current instruction address, the circuit including:

a next instruction address computation unit (1018,1108) coupled to the instruction cache and receiving the current instruction pointer and the current instruction address from the instruction cache, wherein:

responsive to a value of the current instruction pointer being less than a value of the second portion of the current instruction address, the next instruction address computation unit generates the next instruction address having a first portion equal to the first portion of the current instruction address and having a second portion equal to the current instruction pointer; and

responsive to the value of the current instruction pointer being greater than the value of the second portion of the current instruction address, the next instruction address computation unit generates the next instruction address having a first portion equal to an adjusted value of the first portion of the current instruction address and having a second portion equal to the current instruction pointer.

9. A method of receiving a plurality of variable-length instructions from an instruction source and preparing the variable-length instructions for execution, the variable-length instructions including a variable number of instruction units, an instruction unit being a multiple-bit instruction portion, the method comprising the steps of:

receiving a plurality of instruction units in parallel;
storing the plurality of instruction units;
reading one or more instruction units;
determining an instruction length associated to each instruction unit assuming that the instruction unit is a first unit of an instruction;
storing the instruction length associated to each instruction unit;
associating stored instruction units into instructions;
determining whether a plurality of instruction units are decodable by a plurality of first instruction type decoders for decoding a plurality of instructions in parallel and are decodable by a second instruction type decoder serially; and
applying a plurality of instruction units to the first instruction type decoder and the second instruction type decoder, the instruction units being applied to the first instruction type decoder for a plurality of instructions decodable by the first instruction type decoders.

10. The method according to claim 9 wherein:

the instruction unit is an eight-bit byte.

11. A computer system comprising:

a memory subsystem which stores data and instructions; and
apparatus as claimed in claim 1 comprising a processor operably coupled to access the data and instructions stored in the memory subsystem.

**Patentansprüche**

1. Vorrichtung zum Zugreifen auf mehrere von einer Befehlsquelle kommende Befehle variabler Länge und zum Vorbereiten der Befehle für die Ausführung, wobei die Befehle variabler Länge eine oder mehrere Befehlseinheiten aufweisen, wobei eine Befehlseinheit ein Mehrbitbefehlsteil ist, wobei die Vorrichtung aufweist:

- einen Befehlscache (214), der mit der Befehlsquelle verbunden ist und mehrere Befehlsspeicherelemente zum Speichern von Befehlseinheiten und mehrere Codespeicherelemente zum Speichern von Codeeinheiten aufweist, wobei eine Codeeinheit ein Mehrbitcodeteil ist, wobei die Befehlsspeicherelemente den entsprechenden Codespeicherelementen zugeordnet sind und Speichereinheiten speichern, welche entsprechenden Codeeinheiten zugeordnet sind;

- einen Vordecodierer (270), der mit dem Befehlscache zum Lesen von Befehlseinheiten verbunden ist, wobei der Vordecodierer einen die Befehlslänge angebenden Code basierend auf den gelesenen Befehlseinheiten zuweist, wobei angenommen wird, daß jede Befehlseinheit eine erste Befehlseinheit eines Befehls mit variabler Länge ist;

- einen Decodierer (220), der mit dem Befehlscache verbunden ist, um mehrere Befehlseinheiten und mehrere entsprechende Codeeinheiten zu empfangen, wobei der Decodierer mehrere Decodierer (230) für einen ersten Befehlstyp und einen Decodierer (231) für einen zweiten Befehlstyp aufweist, wobei der Decodierer zum parallelen Decodieren mehrerer Befehle des ersten Befehlstyps die mehreren Decodierer für den ersten Befehlstyp verwendet, wenn eine Befehlseinheit des ersten Befehlstyps und eine entsprechende Codeeinheit vom Befehlscache empfangen wird, und ansonsten einen Befehl unter Verwendung des Decodierers für den zweiten Befehlstyp verwendet.

**2.** Vorrichtung nach Anspruch 1, bei der

- die Befehlseinheit ein Acht-Bit-Byte ist; und

- die Codeeinheit aus mehreren Bits besteht, die einen nächsten Befehlszeiger und einen Befehlstyp angeben.

**3.** Vorrichtung nach Anspruch 1, bei der der Decodierer mehrere Befehle des ersten Befehlstyps parallel decodiert, indem er die mehreren Decodierer für den ersten Befehlstyp verwendet, wenn mehrere aufeinanderfolgende Befehlseinheiten des ersten Befehlstyps und mehrere entsprechende Codeeinheiten vom Befehlscache empfangen werden.

**4.** Vorrichtung nach Anspruch 1, ferner mit:

- mehreren Rotatoren (430, 432, 434), die zwischen jeweiligen Decodierern für den ersten Befehlstyp und dem Befehlscache angeordnet sind, wobei die mehreren Rotatoren die Befehle des ersten Befehlstyps zum Decodieren ausrichten.

**5.** Vorrichtung nach Anspruch 1, ferner mit:

- mehreren Befehlsregistern, die zwischen jeweiligen Decodierern für den ersten Befehlstyp und dem Befehlscache angeordnet sind, wobei die mehreren Befehlsregister die Befehlseinheiten des ersten Befehlstyps und mehrere entsprechende Codeeinheiten zwischenspeichern, so daß der Decodierzeitsteuerungszyklus verringert wird.

**6.** Vorrichtung nach Anspruch 1, bei der der Vordecodierer eine Schaltung zum Erzeugen einer Adresse eines nächsten Befehls in einer Liste mehrerer Befehle aufweist, wobei der Befehlscache die Liste der Befehle an adressierten Stellen speichert, wobei die Schaltung aufweist:

- einen Signalgenerator mit mehreren mit dem Befehlscache verbundenen Ausgangsanschlüssen und einem Eingangsanschluß zum Empfangen eines gegenwärtigen Adressenzeigers, wobei der Signalgenerator in Reaktion auf den Empfang des gegenwärtigen Adressenzeigers einen der mehreren mit dem nächsten Befehl an einer adressierten Stelle verbundenen Ausgangsanschlüsse aktiviert.

**7.** Vorrichtung nach Anspruch 1, bei der der Vordecodierer eine Schaltung zum Erzeugen einer nächsten Adresse eines nächsten Befehls nach einem gegenwärtigen Befehl in einer zunehmenden sequentiellen Liste mehrerer Befehle im Befehlscache aufweist, wobei der Befehlscache adressierbar ist und die Liste der Befehle speichert, wobei der gegenwärtige Befehl einen gegenwärtigen Befehlszeiger und eine gegenwärtige Befehlsadresse aufweist, die einen ersten Abschnitt, bei dem es sich um eine Anzahl höchstwertiger Bits der gegenwärtigen Befehlsadresse handelt, und einen zweiten Abschnitt aufweist, bei dem es sich um eine Anzahl geringstwertiger Bits der gegenwärtigen Befehlsadresse handelt, wobei die Schaltung zum Erzeugen einer nächsten Adresse umfaßt:

- eine Einheit (1018, 1108) zum Berechnen der nächsten Adresse, die mit dem Befehlscache verbunden ist und vom Befehlscache den gegenwärtigen Befehlszeiger und die gegenwärtige Befehlsadresse empfängt, wobei:

  - die Einheit zum Berechnen der nächsten Befehlsadresse in Reaktion auf einen Wert des gegenwärtigen Befehlsadressenzeigers, der größer als ein Wert des zweiten Teils der gegenwärtigen Befehlsadresse ist, die nächste Befehlsadresse erzeugt, welche einen ersten Teil, der gleich dem ersten Teil der gegenwärtigen Befehlsadresse ist, und einen zweiten Teil aufweist, der gleich dem gegenwärtigen Befehlsadressenzeiger ist; und

  - die Einheit zum Berechnen der nächsten Befehlsadresse in Reaktion auf einen Wert des gegenwärtigen Befehlsadressenzeigers, der kleiner als ein Wert des zweiten Teils der gegenwärtigen Befehlsadresse ist, die nächste Befehlsadresse mit einem ersten Teil der gegenwärtigen Befehlsadresse und einem zweiten Teil erzeugt, der gleich dem gegenwärtigen Adressenzeiger ist.

**EP 0 853 779 B1**

8. Vorrichtung nach Anspruch 1, bei der der Vordecodierer eine Schaltung zum Erzeugen einer nächsten Adresse eines nächsten Befehls nach einem gegenwärtigen Befehls in einer abnehmenden sequentiellen Liste mehrerer Befehle im Befehlscache aufweist, wobei der Befehlscache zum Speichern der Befehlsliste adressierbar ist, wobei der gegenwärtige Befehl einen gegenwärtigen Befehlszeiger und eine gegenwärtige Befehlsadresse aufweist, die einen ersten Abschnitt, bei dem es sich um eine Anzahl höchstwertiger Bits der gegenwärtigen Befehlsadresse handelt, und einen zweiten Abschnitt aufweist, bei dem es sich um eine Anzahl geringstwertiger Bits der gegenwärtigen Befehlsadresse handelt, wobei die Schaltung umfaßt:

   - eine Einheit (1018, 1108) zum Berechnen der nächsten Adresse, die mit dem Befehlscache verbunden ist und vom Befehlscache den gegenwärtigen Befehlszeiger und die gegenwärtige Befehlsadresse empfängt, wobei:

      - die Einheit zum Berechnen der nächsten Befehlsadresse in Reaktion auf einen Wert des gegenwärtigen Befehlsadressenzeigers, der kleiner als ein Wert des zweiten Teils der gegenwärtigen Befehlsadresse ist, die nächste Befehlsadresse erzeugt, welche einen ersten Teil, der gleich dem ersten Teil der gegenwärtigen Befehlsadresse ist, und einen zweiten Teil aufweist, der gleich dem gegenwärtigen Befehlsadressenzeiger ist; und

      - die Einheit zum Berechnen der nächsten Befehlsadresse in Reaktion auf einen Wert des gegenwärtigen Befehlsadressenzeigers, der größer als ein Wert des zweiten Teils der gegenwärtigen Befehlsadresse ist, die nächste Befehlsadresse mit einem ersten Teil, der einem angepaßten Wert der gegenwärtigen Befehlsadresse entspricht, und einem zweiten Teil erzeugt, der gleich dem gegenwärtigen Adressenzeiger ist.

9. Verfahren zum Empfangen mehrerer Befehle variabler Länge von einer Befehlsquelle und zum Vorbereiten der Befehle variabler Länge zur Ausführung, wobei die Befehle variabler Länge eine variable Anzahl an Befehlseinheiten aufweisen, wobei eine Befehlseinheit ein Mehrbitbefehlsteil ist, wobei das Verfahren die folgenden Schritte umfaßt:

   - paralleles Empfangen mehrerer Befehlseinheiten;
   - Speichern der mehreren Befehlseinheiten;
   - Lesen einer oder mehrerer Befehlseinheiten;
   - Bestimmen einer Befehlslänge, die jeder Befehlseinheit zugeordnet ist, davon ausgehend, daß es sich bei der Befehlseinheit um eine erste Befehlseinheit handelt;
   - Speichern der jeder Befehlseinheit zugeordneten Befehlslänge;
   - Zuordnen gespeicherter Befehlseinheiten zu Befehlen;
   - Feststellen, ob mehrere Befehlseinheiten durch mehrere Decodierer für einen ersten Befehlstyp zum parallelen Decodieren mehrerer Befehle und seriell durch einen Decodierer für den zweiten Befehlstyp decodierbar sind; und
   - Anlegen mehrerer Befehlseinheiten an den Decodierer für den ersten Befehlstyp und den Decodierer für den zweiten Befehlstyp, wobei die Befehlseinheiten an den Decodierer für den ersten Befehlstyp für mehrere Befehle angelegt werden, die durch die Decodierer für den ersten Befehlstyp decodierbar sind.

10. Verfahren nach Anspruch 9, bei dem die Befehlseinheit ein Acht-Bit-Byte ist.

11. Computersystem mit:

   - einem Speichersubsystem, das Daten und Befehle speichert; und

   - einer Vorrichtung nach Anspruch 1 mit einem Prozessor, der betriebsmäßig zum Zugreifen auf die im Speichersubsystem gespeicherten Daten und Befehle verbunden ist.


**Revendications**

1. Dispositif pour accéder à une pluralité d'instructions de longueurs variables issues d'une source d'instruction et préparer les instructions à être exécutées, les instructions à longueur variable comprenant une ou plusieurs unité (s) d'instruction, une unité d'instruction étant une partie d'instruction à plusieurs binaires, le dispositif comprenant:

35

une antémémoire d'instructions (214) couplée à la source d'instructions et comportant une pluralité d'éléments de stockage d'instruction pour stocker des unités d'instruction, et comportant une pluralité d'éléments de stockage de code pour stocker des unités de code, une unité de code étant une partie de code à plusieurs binaires, les éléments de stockage d'instruction étant associés à des éléments de stockage de code correspondant et stocker des unités d'instruction associées à des unités de code correspondantes ;

un prédécodeur (270) couplé à l'antémémoire d'instructions pour lire des unités instruction, le prédécodeur assignant un code indicateur d'une longueur d'instruction sur la base des unités d'instructions de lecture en supposant que chaque unité d'instruction est une première unité d'instruction d'une instruction à longueur variable ;

un décodeur (220) couplé à l'antémémoire d'instruction pour recevoir une pluralité d'unités d'instruction et une pluralité d'unités de code correspondantes, le décodeur incluant une pluralité de décodeurs de premier type d'instruction (230) et un décodeur de second type d'instruction (231), le décodeur servant à décoder une pluralité d'instructions du premier type d'instruction utilisant en parallèle la pluralité de décodeurs du premier type d'instruction lorsqu'une unité d'instruction du premier type d'instruction et une unité de code correspondante sont reçues à partir de l'antémémoire d'instructions et sinon à décoder une instruction en utilisant le décodeur de second type d'instruction.

**2.** Dispositif selon la revendication 1, dans lequel :

l'unité d'instruction est un octet ; et
l'unité de code est une pluralité de binaires désignant un pointeur d'une nouvelle instruction et un type d'instruction.

**3.** Dispositif selon la revendication 1 dans lequel le décodeur décode une pluralité d'instructions de premier type d'instruction utilisant en parallèle la pluralité de décodeurs de premier type d'instruction lorsqu'une pluralité d'unités d'instructions consécutives du premier type d'instruction et une pluralité correspondante d'unités de code sont reçues à partir de l'antémémoire d'instructions.

**4.** Dispositif selon la revendication 1 comprenant, de plus :

une pluralité de rotateurs (430, 432, 434) couplés entre les décodeurs respectifs de premier type d'instruction et l'antémémoire d'instructions, la pluralité de rotateurs servant à aligner les instructions de premier type d'instruction pour un décodage.

**5.** Dispositif selon la revendication 1 comprenant , de plus :

une pluralité de registres d'instructions couplés entre les décodeurs respectifs de premier type d'instruction et l'antémémoire d'instructions, la pluralité de registres d'instructions pour retenir temporairement les unités d'instruction de premier type d'instruction et une pluralité d'unités de code correspondantes de façon qu'un cycle de temps de décodage soit réduit.

**6.** Dispositif selon la revendication 1 dans lequel le prédécodeur comprend un circuit pour générer une adresse d'une nouvelle instruction dans une liste d'une pluralité d'instructions, l'antémémoire d'instructions pour stocker la liste d'instructions au niveau des positions adressées, le circuit comprenant :

un générateur de signal comportant une pluralité de bornes de sortie couplée à l'antémémoire d'instructions et comportant une borne d'entrée couplée pour recevoir un pointeur d'adresse courante dans lequel, en réponse à une réception du pointeur d'instruction courante, le générateur de signal active l'une des bornes de la pluralité des bornes de sortie couplée à la nouvelle instruction au niveau d'une position adressée.

**7.** Dispositif selon la revendication 1 dans lequel le prédécodeur comprend un circuit pour générer une nouvelle adresse d'une nouvelle instruction après une instruction courante dans une liste séquentielle croissante d'une pluralité d'instructions dans l'antémémoire d'instructions, l'antémémoire d'instructions étant adressable et stockant la liste d'instructions, l'instruction courante comprenant un pointeur d'instruction courante et une adresse d'instruction courante présentant une première partie qui est un nombre de binaires les plus significatifs de l'adresse d'instruction courante et comportant une seconde partie qui représente un nombre de binaires les moins significatifs de l'adresse d'instruction courante, le circuit pour générer une nouvelle adresse comprenant :

une unité de calcul de nouvelle adresse d'instruction (1018, 1108) couplée à l'antémémoire d'instructions et recevant à partir de l'antémémoire d'instructions le pointeur d'instruction courante et l'adresse d'instruction courante, dans laquelle :

en réponse à une valeur du pointeur d'adresse d'instruction courante qui est supérieure à une valeur de la seconde partie de l'adresse d'instruction courante, l'unité de calcul de nouvelle adresse d'instruction génère la nouvelle adresse d'instruction présentant une première partie égale à la première partie de l'adresse d'instruction courante et présentant une seconde partie égale au pointeur d'adresse d'instruction courante ; et

en réponse à la valeur du pointeur d'adresse d'instruction courante qui est inférieure à la valeur de la seconde partie de l'adresse d'instruction courante, l'unité de calcul de nouvelle adresse d'instruction génère la nouvelle adresse d'instruction présentant une première partie de l'adresse d'instruction courante et présentant une seconde partie égale au pointeur d'instruction courante.

8. Dispositif selon la revendication 1 dans lequel le prédécodeur comprend un circuit pour générer une nouvelle adresse d'une nouvelle instruction après une instruction courante dans une liste séquentielle décroissante d'une pluralité d'instructions dans l'antémémoire d'instructions, l'antémémoire d'instructions étant adressable pour stocker la liste d'instructions, l'instruction courante incluant un pointeur d'instruction courante et une adresse d'instruction courante présentant une première partie qui représente un nombre de binaires les plus significatifs de l'adresse d'instruction courante et présentant une seconde partie qui représente un nombre de binaires les moins significatifs de l'adresse d'instruction courante, le circuit comprenant :

une unité de calcul de nouvelle adresse d'instruction (1018, 1108) couplée à l'antémémoire d'instructions et recevant le pointeur d'instruction courante et l'adresse d'instruction courante à partir de l'antémémoire d'instructions, dans laquelle :

en réponse à une valeur du pointeur d'instruction courante inférieure à une valeur de la seconde partie de l'adresse d'instruction courante, l'unité de calcul de nouvelle adresse d'instruction génère la nouvelle adresse d'instruction présentant une première partie égale à la première partie de l'adresse d'instruction courante et présentant une seconde partie égale au pointeur d'instruction courante ; et

en réponse à la valeur du pointeur d'instruction courante supérieure à la valeur de la seconde partie de l'adresse d'instruction courante, l'unité de calcul de nouvelle adresse d'instruction génère la nouvelle adresse d'instruction présentant une première partie égale à une valeur ajustée de la première partie de l'adresse d'instruction courante et présentant une seconde partie égale au pointeur d'instruction courante .

9. Procédé de réception d'une pluralité d'instructions de longueur variable à partir d'une source d'instructions et de préparation des instructions de longueur variable pour être exécutées, les instructions de longueur variable comprenant un nombre variable d'unités d'instruction, une unité d'instruction étant une partie d'instruction à plusieurs binaires, le procédé comprenant les étapes consistant à :

recevoir en parallèle une pluralité d'unités d'instruction ;
stocker la pluralité d'unités d'instructions ;
lire une ou plusieurs unité(s) d'instructions ;
déterminer une longueur d'instruction associée à chaque unité d'instructions en supposant que l'unité d'instruction est une première unité d'une instruction ;
stocker la longueur d'instruction associée à chaque unité d'instruction ;
associer les unités d'instructions stockées en instructions ;
déterminer si une pluralité d'unités d'instruction peut être décodée par une pluralité de décodeurs de premier type d'instruction pour décoder une pluralité d'instructions en parallèle et si elles sont décodables par un décodeur de second type d'instruction en série ; et
appliquer une pluralité d'unités d'instructions au décodeur de premier type d'instruction et au décodeur de second type d'instruction, les unités d'instructions étant appliquées au décodeur de premier type d'instruction pour une pluralité d'instructions décodables par les décodeurs de premier type d'instruction.

10. Procédé selon la revendication 9, dans lequel :

l'unité d'instruction est un octet.

**11.** Système d'ordinateur comprenant :

un sous-système de mémoire qui stocke des données et des instructions ; et
un dispositif selon la revendication 1, comprenant un processeur couplé fonctionnellement pour accéder aux données et aux instructions stockées dans le sous-système de mémoire.

**FIG. 1**

EP 0 853 779 B1

FIG. 2

|  | | | SCHEDULER<br>ISSUE STAGE | SCHEDULER<br>STAGE 0 | SCHEDULER<br>STAGE 1 | SCHEDULER<br>STAGE 2 | COMPLETED |

350

| 310 | 320 | 330 | 340 | |

| x86 Instruction<br>Fetch | x86 Instr<br>Decode | RISC86<br>Issue | Operand<br>Fetch | ALU | Result<br>xfer | | (RegOp) |

352        362

340

| | | | Operand<br>Fetch | Addr<br>Calc | Dcache<br>DTLB | Result<br>xfer | (LdStOp) |

324        364

| | Branch<br>Decode | | | | | BrCond<br>Eval | (BrOp) |

| | BTC<br>Fetch | Tgt/Tgt+16<br>IFetch | | | | | |

326        328

**FIG. 3**

EP 0 853 779 B1

**FIG. 4**

500 →

510 →

| 512 | 514 |
|-----|-----|
| 522 | 524 |
| 532 | 534 |

520 →

530 →

**FIG. 5**

```
┌─────────────────┐
│  Read Pointer and │
│   Address of     │——610
│  Current Element │
└─────────────────┘
         │
         ▼
      ╱╲ 612
     ╱    ╲        No
    ╱ Pointer > LSBs╲────────┐
    ╲  of Address? ╱         │
     ╲    ╱                  │
      ╲╱                     ▼
       │ Yes        ┌─────────────────┐
       │            │  Adjust MSBs of  │——614
       │            │ Current Element  │
       │            │    Address       │
       │            └─────────────────┘
       │                     │
       ▼◄────────────────────┘
┌─────────────────┐
│  Append MSBs of  │
│ Current Element  │——616
│   to Pointer     │
└─────────────────┘
```

**FIG. 6**

FIG. 7

| 810 | 0000 | 01110100 | 0100 |
| | 0001 | 10110100 | 0110 |
| | 0010 | 11110000 | 0100 |
| | 0011 | 10110010 | 1101 |
| 830 | 0100 | 10110011 | 1100 |
| | 0101 | 10000001 | 0101 |
| | 0110 | 11000010 | 1000 |
| | 0111 | 11001010 | 0110 |
| | 1000 | 11010010 | 1100 |
| | 1001 | 11010010 | 1001 |
| | 1010 | 10100100 | 1100 |
| | 1011 | 11010110 | 1011 |
| 850 | 1100 | 11101000 | 1100 |
| | 1101 | 00101000 | 1101 |
| | 1110 | 00100010 | 1110 |
| | 1111 | 10110000 | 1111 |

800

812 814 816 818 832 822 824 832

**FIG. 8**

Select a Byte —910

Treat byte as the start of an instruction —912

Is the Instruction "Short"? —914 — No

Yes

Is the Instruction Length Ascertainable? —918 — No

Yes

928 — Select Next Byte

916 — Indicate Instruction is not "Pre-Decodeable"

Determine Instruction Length —920

Identify Instruction Location —922

Associate Location of the Following Instruction with the Byte —924

Additional Bytes? —926 — No — Stop —930

Yes

**FIG. 9**

FIG. 10

EP 0 853 779 B1

FIG. 11

FIG. 12

FIG. 13